# EUROPEAN PATENT SPECIFICATION

(11) **EP 2 925 592 B1**
(45) Date of publication and mention of the grant of the patent: **06.11.2019**
(21) Application number: 12889164.5
(22) Date of filing: 30.11.2012
(51) Int. Cl.: B60Q 1/00, B62J 6/02, F21S 41/29, F21S 43/27, F21S 43/20

(54) **ADDITIONAL LIGHT STRUCTURE OF PROJECTOR LIGHT ASSEMBLY FOR MOTORCYCLE**
ZUSATZLEUCHTSTRUKTUR EINER PROJEKTORBELEUCHTUNGSANORDNUNG EINES MOTORRADES
STRUCTURE DE LUMIÈRE SUPPLÉMENTAIRE D'ENSEMBLE LUMIÈRE DE PROJECTEUR POUR MOTO

(43) Date of publication of application: 07.10.2015
(73) Proprietor: Honda Motor Company Limited, Tokyo 107-8556 (JP)
(72) Inventor: MATSUZAKI, Teppei, Wako-shi Saitama 351-0193 (JP); POOHRINUTTHAPOOM, Wasanpus, Bangkok 10520 (TH)
(74) Representative: Kiwit, Benedikt
(86) International application number: PCT/TH2012/000051
(87) International publication number: WO 2014/084801

(56) References cited:
- EP-A1- 1 150 063
- EP-A1- 2 159 481
- EP-A1- 2 463 575
- EP-A2- 2 187 115
- WO-A1-2012/070169
- WO-A1-2012/070169
- DE-A1-102010 054 923
- JP-A- 2008 068 680
- JP-A- 2008 068 680
- TW-A- 201 033 064
- US-A1- 2005 254 253
- US-A1- 2006 232 987
- US-A1- 2007 047 249

## Description

### TECHNICAL FIELD

This invention relates generally to projector lighting devices such as headlamp or headlight assemblies for vehicles including saddle-ride or straddle-ride type vehicles, for instance, motorbikes, motorcycles, or scooters.

### BACKGROUND ART

In a conventional vehicle headlight, it is well known to utilize a projector lighting device having a projector lens, which projects light output by a primary headlight illumination source such as a projector bulb in a forward direction (i.e., out of the vehicle headlight and away from the vehicle). Usually, the projector lens is held by a lens holder of the projector lighting device. Sometimes, the lens holder is made of a light-transmitting material, such as a clear resin or plastic material.

It is also known in a conventional vehicle headlight to include an additional light source, such as a position or auxiliary bulb, which resides external and generally adjacent to the projector lighting device. The additional light source is configured for outputting light that can be received by an additional lighting element located external to the projector lens, such that the additional lighting element can provide additional lighting around the projector lens. For example, FIG. 1 of U.S. Patent No. 6,193,400 provides a cross sectional illustration of an additional light source secured next to a projector lighting device having a lens holder that retains a projector lens. An additional lighting element is provided by a Fresnel lens having a central opening therein, as shown in FIG. 2 and FIG. 3 of U.S. Patent No. 6,193,400. The Fresnel lens is circumferentially disposed around the projector lens, such that it surrounds the entire outer periphery of the projector lens.

From EP 2 159 481 A1 it is known a lighting device for a vehicle. The lighting device includes a projection lens disposed on an optical axis and having a focal line, a first light emitting device disposed on a rear side of the focal line, a reflector which reflects light toward the focal line; a shade which shields a part of the light; a second light emitting device disposed on a rear side of the first light emitting device; and a light guide. The light guide includes an incident portion into which light emitted from the second light emitting device is introduced, a light guiding portion which guides the light, a shielding portion which forms a part of the shade, and an emitting portion coupled to the shielding portion and disposed on the focal line or in a vicinity of the focal line. The emitting portion emits the light guided by the light guiding portion.

From EP 2 187 115 A2 it is known a vehicular lamp having first and second light sources that are formed of semiconductor light emitting devices, a first optical member to control light emitted from the first light source, a second optical member to control light emitted from the second light source, a projection lens to emit the light controlled by the first and second optical members toward the front side of a vehicle; and a single heat sink that is thermally connected to both the first and second light sources. The first and second light sources are configured to not be turned on at the same time.

### DISCLOSURE

### Technical Problem

In the above prior art vehicle headlights a separate additional light source is associated with each projector lighting device. For example, for a dual headlight vehicle such as a motorcycle having right and left headlights and thus right and left projector lighting devices, two additional light sources are utilized, namely, a first additional light source corresponding to the left projector lighting device and a second additional light source corresponding to the right projector lighting device. This undesirably increases vehicle parts count and cost. It would be useful if additional lighting around two or more projector lenses could be provided by a single additional light source; however, such a single additional light source would require greater light output power to ensure adequate uniformity and/or intensity of the additional lighting around all projector lenses under consideration. This greater light output power undesirably translates to a higher cost for the single additional light source, even in situations such as a dual headlight motorcycle in which dual projector lighting devices are comparatively close together.

It is desired to provide a low-cost, reduced or minimum parts count vehicle light assembly (e.g., headlight assembly) having two (or more) projector lighting devices, each of which holds a corresponding projector lens; and a single additional light source that can effectively provide additional lighting to additional lighting elements disposed about different portions or sides (e.g., right and left sides) of each projector lens.

### Technical Solution

This invention according to Claim 1 is a light assembly (e.g., a headlight assembly) mountable in a motorcycle provided with (a) projector illumination units having a projector lens projecting a light from a light source, and a light-transmitting lens holder to which the projector lens is mounted; and (b) an additional light source providing lighting beyond or around a periphery of said projector lens by way of light that travels through said light-transmitting lens holder, wherein the projector illumination units are mountable on the motorcycle such that at least two of said projector illumination units are mounted near each other and said additional light source is mounted between said projector illumination units, and said light-transmitting lens holders have formed therein or thereon a light diffusion means for scattering the light from the additional light source.

This invention according to Claim 1 further has a light-transmitting inner lens mounted around said projector lens, and the light-transmitting inner lens is configured to emit light by receiving the light from said light scattering means (i.e. the light diffusion means).

This invention according to Claim 1 further has a characteristic in that said light-transmitting inner lens is formed as an integral structure that extends away from different side portions (e.g., right and left side portions) of each of said projector illumination units.

This invention according to Claim 1 further has a characteristic in that said light-transmitting inner lens includes a first lighting portion corresponding to an outer side of each of said projector lenses, and a second lighting portion between said projector illumination units and said additional light source, the second lighting portion for providing additional lighting by receiving light directly from said additional light source.

This invention according to Claim 2 has, in the light assembly of Claim 1, a characteristic in that said projector lens is resiliently or elastically mounted to said light-transmitting lens holder.

This invention according to Claim 3 has, in the light assembly of Claim 1, a characteristic in that the at least two projector illumination units are headlight mountable on a front portion of said motorcycle and said projector lens projects a low beam illumination, and the motorcycle light assembly further includes low beam reflectors and high beam reflectors integrally formed under said low beam reflectors, and said light-transmitting lens holders exhibit an upper half circle shape as viewed from a front view toward the front portion of the motorcycle, when the light assembly is mounted on the motorcycle.

This invention according to Claim 4 has, in the light assembly of Claim 3, a characteristic in that a hole means is formed in said upper half circle shape of each of said light-transmitting lens holders.

This invention according to Claim 4 further has a characteristic in that said hole means are formed symmetrically relative to the front view of the motorcycle and the position of the light passing from said additional light source to said light diffusion means.

This invention according to Claim 5 has, in the light assembly of Claim 3, a characteristic in that said additional light source is centrally mounted between both of said projector illumination units and on an upper side of each of said light-transmitting lens holders.

This invention according to Claim 6 has, in the light assembly of Claim 5, a characteristic in that said additional light source is a single position bulb of the motorcycle.

This invention according to Claim 7 has, in the light assembly of Claim 6, a characteristic in that each of said projector lenses includes a center point, and said position bulb is vertically offset relative to each projector lens center point in a direction toward a hole means formed in an upper half circle portion of each light-transmitting lens holder.

This invention according to Claim 8 has, in the light assembly of Claim 7, a characteristic in that said hole means includes a set of optical windows configured for enabling the passage of position bulb illumination therethrough and convective transfer of projector bulb heat therethrough.

This invention according to Claim 9 has, in the light assembly of Claim 1, a characteristic in that a projector bulb illumination exhibits a first color, and said light-transmitting inner lens exhibits a second color that is readily visually distinguishable from the first color.

This invention according to Claim 10 has, in the light assembly of Claim 1, an extension member configured for selectively covering portions of said light-transmitting inner lens, the extension member including a set of openings, each opening within the set of openings configured for receiving said first lighting portion corresponding to the outer side of each projector lens.

This invention according to Claim 11 has, in the light assembly of Claim 9, a characteristic in that said light-transmitting inner lens includes at least two circle portions integrally formed therein, each said circle portion surrounding a corresponding projector lens.

This invention according to Claim 12 has, in the light assembly of Claim 2, a characteristic in that a projector lens retention portion of each light-transmitting lens holder has a circumference that surrounds or approximately surrounds the entire circumference of the projector lens corresponding to the light-transmitting lens holder, and a body portion of each light-transmitting lens holder surrounds significantly less than the entire circumference of the projector lens corresponding to the light-transmitting lens holder.

This invention according to Claim 13 has, in the light assembly of Claim 3, a characteristic in that said high beam reflectors are configured for directly receiving both high beam illumination emitted by projector bulbs and an additional light emitted by said additional light source.

### Advantageous Effects

According to the invention disclosed in Claim 1, the additional light source is placed between projector illumination units which are placed near (e.g., close, generally close, or relatively close to) each other. Even though a distance between the light sources corresponding to the projector illumination units can be substantial, a single additional light source can be used for providing additional or auxiliary lighting (e.g., position lighting) on different peripheral borders or sides of each projector lens. This single additional light source need not provide high light output power, in part because of the light diffusion means formed in or on the light-transmitting lens holders, which can effectively scatter or distribute light received from the additional light source to facilitate the provision of additional lighting beyond the periphery (e.g., an outer peripheral border) of the projector lens. The invention disclosed in Claim 1 thus results in light assembly having a characteristic (e.g., visually distinct) and high visibility additional lighting, and also a reduced or minimum number of parts and cost.

Further according to the invention disclosed in Claim 1, a light-transmitting / light emitting inner lens is mounted around portions of each projector lens. The light-transmitting inner lens can emit light by receiving the light from the light diffusion means formed in / on the light- transmitting lens holders. As a result, the inner lens can transmit or emit additional lighting (e.g., position lighting) in accordance with a desired or intended as-manufactured characteristic form or profile, for instance, based upon the shape(s) and/or dimension(s) of particular portions of the inner lens. As an illustrative example, a given inner lens (e.g., corresponding to a first model of motorcycle) can be manufactured to provide a given characteristic additional lighting profile, and another inner lens (e.g., corresponding to a second model of motorcycle) can be manufactured to provide a different characteristic additional lighting profile. Consequently, different motorcycle models can exhibit different characteristic additional lighting profiles by way of a minimal parts count, low cost vehicle lighting assembly that exhibits common structural aspects or traits, including structural aspects that can be readily tailored or adjusted, across multiple motorcycle models. As another illustrative example, the characteristic additional lighting profile of a particular motorcycle model can be readily modified over time, such as when a new version of the motorcycle model is produced.

Further according to the invention disclosed in Claim 1, the light-transmitting inner lens is formed as an integral or single piece structure (e.g., by way of a molding process, such as an injection molding process). When mounted around the projector illumination units, this single inner lens can emit light corresponding to different sides or portions (e.g., right and left sides) of each of the projector illumination units. A light-transmitting inner lens having an integral or one piece form or shape thus results in reduced parts count and reduced cost. Further according to the invention disclosed in Claim 1, the single piece inner lens has (a) a first lighting portion corresponding to or extending away from an outer side or outside portion each projector lens, and (b) a second lighting portion corresponding to an inner side or inside portion of each projector lens (between the projector illumination units and the additional light source), where each second lighting portion can directly receive light from the additional light source. Each first lighting portion can receive light that is scattered from the light diffusion means of its corresponding light-transmitting lens holder. As a result, the inner lens can emit light on both outer and inner sides (e.g., right and left sides) of each projector lens. That is, the single piece inner lens can emit additional lighting (e.g., position lighting) relative to, from, or at both right and left sides of each projector lens. In a manner identical or analogous to that previously indicated, the inner lens can be created or manufactured such that its first and second lighting portions provide a desired or intended characteristic additional lighting profile on both sides of each projector lens.

According to the invention disclosed in Claim 2, the projector lens is resiliently or elastically mounted to the light-transmitting lens holder (e.g., by way of resiliently displaceable latch, clasp, spring type, or other elements). No additional parts are required to retain the projection lens and its lens holder in place, resulting in reduced parts count and cost. Additionally, the use of additional parts that could obstruct light output by the additional light source and/or light emitted by the inner lens is avoided.

According to the invention disclosed in Claim 3, the projector illumination units are mounted on a front portion of the motorcycle to provide motorcycle headlight illumination (e.g., right side and left side headlight illumination). The projector lens projects low beam illumination, and the vehicle light assembly has low beam reflectors and high beam reflectors, where the high beam reflectors are integrally formed under or beneath the low beam reflectors. The light-transmitting lens holders have an upper half circle shape when viewed toward the motorcycle's front portion. More particularly, each light-transmitting lens holder is spatially open below its upper half circle shape, and thus the light-transmitting lens holders omit or exclude a bottom or lower portion. As a result, light from a light source such as a projector bulb can be emitted fully, directly, or unobstructed to the high beam reflector. Additionally, because each light-transmitting lens holder excludes a lower portion or lower structural elements beneath its upper portion, material quantity for manufacturing each lens holder is reduced, resulting in reduced cost and weight.

According to the invention disclosed in Claim 4, the upper half circle shape of each light-transmitting lens holder has a hole means is formed therein, which again reduces the amount of material required for manufacturing the lens holder, resulting in reduced cost and weight. Furthermore, the hole means can provide a ventilation pathway for heat generated by a light source.

Further according to the invention disclosed in Claim 4, the hole means of the light-transmitting lens holder is symmetrically formed with respect to the front view of the motorcycle, as well as the position of the light passing from the additional light source to the light-transmitting lens holder's light diffusion means. Light from the additional light source can therefore pass through the hole means unobstructed or unattenuated. Additionally, a right side light- transmitting lens holder and a left side light-transmitting lens holder can have an identical structure. Thus, a single light-transmitting lens holder structure can be used for holding right side and left side projector lenses, reducing parts count, complexity, and cost.

According to the invention of Claim 5, the additional light source is centrally disposed between the at least two projector illumination units (e.g., between both projector illumination units in a right - left dual headlight configuration), and is also disposed on an upper side of the two projector illumination units' light-transmitting lens holders. Because of (a) such central placement of the additional light source, (b) the structural configuration of the high beam reflectors underneath the low beam reflectors, and (c) the light-transmitting lens holders' open structure beneath their upper half circle shapes, light from the additional light source can also be emitted by the high beam reflector, thereby increasing the brightness of additional lighting (e.g., position lighting) output by the vehicle light assembly, on both right and left sides of the motorcycle's front portion.

According to the invention of Claim 6, the additional light source is a single position bulb. Light from the single position bulb can travel to the light diffusing means of each light-transmitting lens holder, whereupon such light can be scattered in a manner that facilitates the provision position lighting having appropriate or suitable spatial uniformity and intensity around two projector illumination units. As a result, this invention provides a reduced parts count, reduced cost vehicle light assembly in which one ordinary, moderately low, or low power position bulb can provide position lighting around portions of both right and left projector lenses.

According to the invention of Claim 7, the position bulb is vertically offset from a center point of each position bulb in a direction toward a hole means formed in an upper half circle portion of each light-transmitting lens holder. Light from the position bulb can travel through or across a spatial area or volume corresponding to an interior portion of each light-transmitting lens holder by passing unobstructed or unattenuated through the hole means, thereby arriving at each light-transmitting lens holder's light diffusion means.

According to the invention of Claim 8, the hole means in each light-transmitting lens holder is a set of optical windows (e.g., a pair of optical windows, such as right and left optical windows) configured to allow passage of both position bulb illumination and as convective heat generated by a projector bulb. As a result, such optical windows provide additional utility for ventilating cumulative projector bulb heat.

According to the invention of Claim 9, the projector bulb illumination exhibits a first color (e.g., white), and the light-transmitting inner lens exhibits a second color (e.g., blue or amber) which can be readily visually distinguished from the first color. The light-transmitting inner lens can therefore be readily designed or manufactured to emit additional lighting having an intended or desired characteristic color that can make the vehicle more visible or conspicuous to others, thus facilitating enhanced vehicle safety.

According to the invention of Claim 10, an extension member which selectively covers portions of the light-transmitting inner lens includes openings that receive a first lighting portion corresponding to an outer side or outside portion of each projector lens. The extension member can thus selectively optically isolate or block portions of the vehicle light assembly light, such that additional lighting (e.g., position lighting) can be provided in an intended or desired manner in accordance with an as-manufactured extension member design.

According to the invention of Claim 11, circular portions are integrally formed in the light-transmitting inner lens, where each circular portion surrounds one of the projector lenses. Such circular portions in the light-transmitting inner lens facilitate mounting of the inner lens to the light-transmitting lens holder, in a simple manner which avoids potential obstruction of light.

According to the invention of Claim 12, each light-transmitting lens holder includes a projector lens retention portion that entirely or significantly surrounds portions of a corresponding projector lens' circumference, and a body portion (e.g., a shroud member) that surrounds significantly less than the entire circumference of the projector lens. As a result, the light-transmitting lens holder is a spatially open or highly spatially open structure that excludes unnecessary portions which could obstruct or attenuate light from the additional light source, and which exhibits reduced or minimal weight and cost.

According to the invention of Claim 13, the vehicle light assembly's high beam reflectors can directly receive high beam illumination emitted by projector bulbs, as well as light emitted by the additional light source. The high beam reflectors can thus reflect light emitted by the additional light source out of the vehicle light assembly, increasing the overall amount or intensity of additional lighting (e.g. position lighting) that can be perceived by an observer, facilitating enhanced vehicle visibility and safety, in a manner that is efficient relative to parts count and cost.

### Brief Description of the Drawings

FIG. 1 is a side view of a representative motorcycle to which a motorcycle light assembly (e.g., a headlight assembly) is mounted in accordance with an embodiment of the present disclosure.
FIG. 2 is a front view of the motorcycle of FIG. 1, illustrating certain portions of a motorcycle light assembly that are disposed behind or beneath portions of the motorcycle's exterior front surface, and in particular behind an outer lens of the motorcycle light assembly in accordance with an embodiment of the present disclosure.
FIG. 3 is another partial front view of the motorcycle of FIG. 1.
FIG. 4 provides another partial front view of the motorcycle of FIGs. 1-3, which illustrates further details regarding portions of a motorcycle light assembly that are disposed behind, beneath, or under portions of an exterior front surface of the motorcycle in accordance with an embodiment of the present disclosure.
FIG. 5 is a first left-right cross-sectional schematic illustration of a motorcycle light assembly, which includes an extension member configured for covering particular inner portions of the motorcycle light assembly in accordance with an embodiment of the present disclosure.
FIG. 6 is a second left-right cross-sectional schematic illustration of a motorcycle light assembly corresponding to FIG. 5, which includes an inner lens member configured for providing first / outer and second / inner right lighting portions and first / outer and second / inner left lighting portions in accordance with an embodiment of the present disclosure.
FIG. 7 is a third left-right cross-sectional schematic illustration of a motorcycle light assembly in accordance with an embodiment of the present disclosure.
FIG. 8A is a rear schematic illustration showing portions of the additional lighting subassembly, which depicts spatial relationships between portions of a projector lens holder and first / outer and second / inner lighting portions of an inner lens in accordance with an embodiment of the present disclosure.
FIG. 8B is a cross-sectional view of FIG. 8A taken along a vertical reference line 205 in accordance with an embodiment of the present disclosure.
FIG. 9 is the first left-right cross-sectional schematic illustration of the vehicle light assembly of FIG. 7, showing representative optical paths along which light output by an additional light source can travel to and/or be distributed across first / outer and second / inner lighting portions around and/or extending away from both left and right projector lenses in accordance with an embodiment of the present disclosure.
FIG. 10 is a schematic illustration showing internal vehicle light assembly destinations to which illumination provided by an additional light source such as a position light can travel for providing additional lighting in accordance with an embodiment of the present disclosure.
FIG. 11A is a top schematic illustration showing portions of an additional lighting subassembly configured for providing or outputting additional, auxiliary, or position lighting using a single additional light source (e.g., a single position bulb) by which illumination can be delivered to multiple inner lens lighting portions corresponding to both right and left projector lenses in accordance with an embodiment of the present disclosure.
FIG.11B is a cross-sectional view showing details of portions of an additional lighting subassembly of FIG. 11A in accordance with an embodiment of the present disclosure.
FIG. 12 is a first front-rear cross-sectional cutaway schematic illustration of portions a vehicle light assembly in accordance with an embodiment of the present disclosure, showing the generation and output of low beam headlight illumination.
FIG. 13 is a second front-rear cross-sectional cutaway schematic illustration of portions of the vehicle light assembly of FIG. 12, showing the generation and output of high beam headlight illumination.

### Detailed Description of Example Embodiments

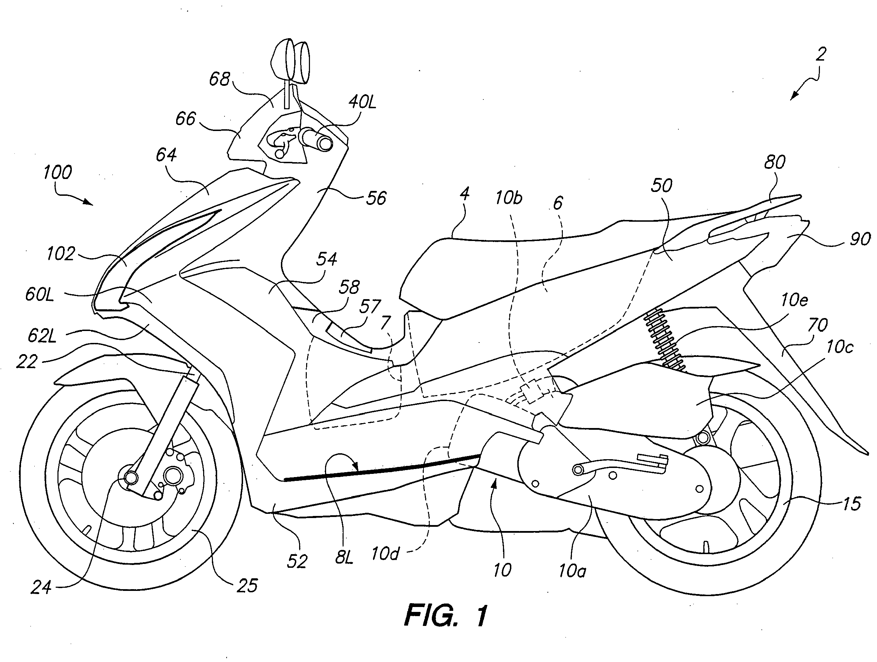

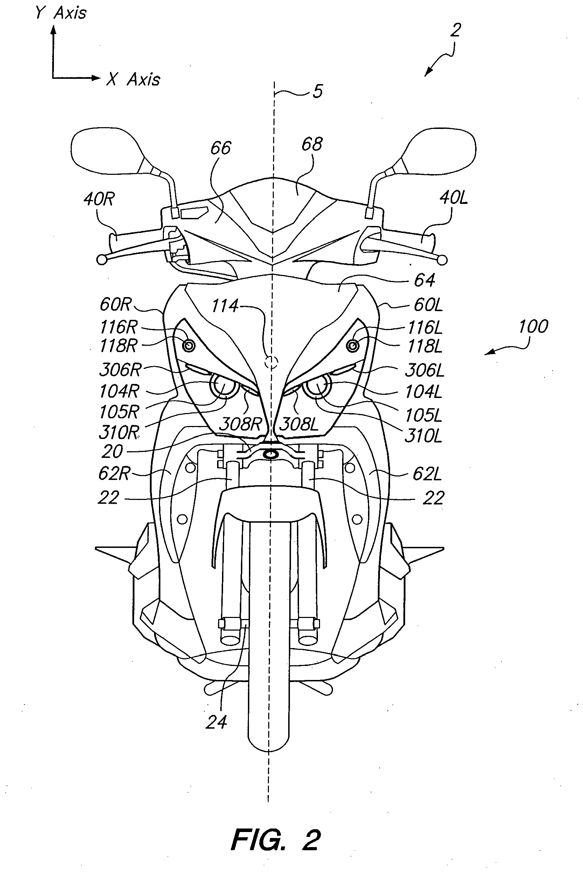

FIG. 1 is a left-side view of a motorcycle 2 to which a motorcycle light assembly (e.g., a headlight assembly) 100 is mounted in accordance with an embodiment of the present disclosure, and FIG. 2 is a front view of the motorcycle 2 of FIG. 1. With reference to each of FIG. 1 and 2, in several embodiments, the motorcycle 2 is, or exhibits structural elements or features corresponding to, an underbone type motorcycle, in a manner understood by one of ordinary skill in the relevant art. Thus, the motorcycle 2 includes an underlying structural frame that is coupled to a seat 4 on which a rider can sit and open and close a luggage box 6 disposed beneath the seat 4; a step floor 8L (e.g., separate right and left step floors on each side of the motorcycle 2) having an upper surface for supporting the rider's foot; an engine unit 10 positioned below the seat 4 and the luggage box 6, which is configured to generate a propulsion or driving force deliverable to a rear wheel 15 coupled to a rear axle; a steering stem 20; a rear fender 70; a grab rail or grip 80; a rear combination light 90, such as a combined tail light and rear winker or blinker light; and other components or elements in a manner readily understood by one of ordinary skill in the relevant art.

The engine unit 10 is swingably mounted to a frame of the motorcycle 2, and comprises an intake system 10b (including a fuel injection system) connected to an engine 10d; an air-cleaner case 10c connected to the intake system 10b; and a continuous variable belt transmission (belt converter transmission) 10a which transmits engine driving force to the rear wheel 15. The engine unit 10 is able to move pivotally in a front portion of the engine unit 10, and is supported at a rear portion of the engine unit 10 by a rear suspension 10e. This motorcycle style adapted belt continuously variable transmission (belt-CVT) 10a is commonly called a "Scooter."

The steering stem 20 is coupled to a pair of front forks 22, within which a front wheel 25 rotatably supported by a front axle 24 is disposed. The upper portion of steering stem 20 is further coupled to a handle bar (e.g., by way of a main pipe or head pipe) that includes a right handle grip 40R and a left handle grip 40L. Steering motion imparted to the handle bar in response to a rider's relative pivotal displacement of the right handle grip 40R and the left handle grip 40L about a steering axis causes the front wheel 25 to turn in a right or left direction.

The motorcycle's structural frame is covered or overlaid by a number of panels or cover members, in a manner understood by one of ordinary skill in the relevant art. For instance, the motorcycle 2 can include a pair of rear body covers 50 disposed below and adjacent to the seat in both side of motorcycle; an under cover 52 respectively covering right and left front underside portions of motorcycle 2; a pair of main pipe side covers 54 and a pair of main pipe upper covers 56 corresponding to right and left sides of the leg shield portion of motorcycle 2 covering the front of both legs of rider; and a center cover 58 covered from rearward of main pipe upper covers 56 to under the seat 4, and which is positioned between a rider's legs. In some embodiments, a fuel lid cover 57 can be disposed within a portion of the center cover 58, which corresponds to a fuel tank 7 disposed beneath the center cover 58. The motorcycle 2 can further include a number of panel members corresponding to exterior front or forward facing portions of the motorcycle 2, such as a right front cover 60R and a left front cover 60L; a right front lower cover 62R and a left front lower cover 62L; a top front cover 64; a front handle cover 66; and a meter visor 68, in a indicated shown in FIG. 1 and FIG. 2.

The motorcycle light assembly 100 resides in the front cover 60, above the front wheel 25, below the front handle cover 66, and is mounted on a front portion or frontal region of the motorcycle 2 corresponding to the top front cover 64 and each of the right and left front covers 60R,L. The right and left front covers 60R,L are configured for fitting around right and left portions or sides of the motorcycle light assembly 100, respectively; and the top front cover 64 is configured for selectively covering a middle portion of the motorcyle light assembly 100. The motorcycle light assembly 100 includes a translucent or transparent outer lens 102 through which illumination output by the motorcycle light assembly 100 can be directed or projected away from the motorcycle 2, in one or more directions corresponding to the motorcycle's running direction. In a number of embodiments, the motorcycle light assembly's outer lens 102, the right front cover 60R, the left front cover 60L, and the top front cover 64 are configured for cooperative alignment or engagement relative to each other to form portions of a front exterior surface of the motorcycle 2. Inner, or internal to this front exterior surface, the motorcycle light assembly 100 includes various elements as described in detail hereafter.

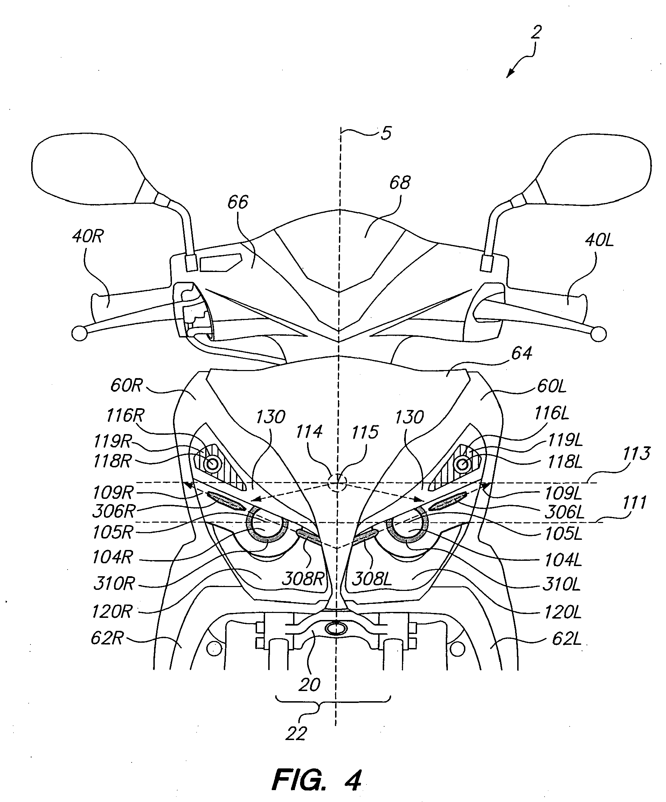

FIG. 2 front view of the motorcycle 2 of FIG. 1, illustrating certain portions of the motorcycle light assembly 100 that are disposed internal to the motorcycle exterior front surface, and in particular inside the motorcyle light assembly's outer lens 102, in accordance with an embodiment of the present disclosure. FIG. 4 is a partial front view of the motorcycle 2 of FIG. 1 and FIG. 2, which illustrates further internal details and layout relationships regarding portions of the motorcycle light assembly 100 that are disposed behind, beneath, or under the exterior front surface of the motorcycle 2 in accordance with an embodiment of the present disclosure.

In an embodiment, the motorcycle light assembly 100 includes a right projector lens 104R and a left projector lens 104L, each of which is respectively configured for outputting right and left low beam illumination generated by right and left light sources such as right and left projector bulbs, as further detailed below. Each of the right projector lens 104R and the left projector lens 104L includes a center point or centroid 105R, 105L relative to a projector lens periphery, peripheral border, or circumference. Each projector lens 104R,L exhibits a given cross sectional area or diameter, in a manner understood by one of ordinary skill in the relevant art.

In various embodiments, the right projector lens 104R and the left projector lens 104L are horizontally or laterally, with respect to a side direction of motorcycle, separated from each other (e.g., with respect to an x-axis) by a given or predetermined distance, in a manner understood by one of ordinary skill in the relevant art. For instance, the center points 105R,L of the right and left projector lenses 104R,L can reside or approximately reside in a common horizontal plane or along a common line as illustrated in FIG. 4, such that the right and left projector lenses 104R,L are disposed along a common horizontal projector lens midline 111 at equal or approximately equal vertical heights relative to the ground (e.g., where such height is defined with respect to a y-axis).

The motorcycle light assembly 100 also includes a plurality of lighting portions, members, or lens elements, such as (a) a first or outer right lighting portion or element (i.e., a first / outer right side lighting portion) 306R and a second or inner right lighting portion element (i.e., a second / inner right side lighting portion) 308R; and (b) a first or outer left lighting portion or element (i.e., a first / outer left side lighting portion) 306L and a second or inner left lighting portion or element (i.e., a second / inner left side lighting portion) 308L. The motorcycle's lighting portions, members, or elements can additionally include left and right circle portions 310L,R which surround the left and right projector lenses 104L,R, respectively.

With respect to a vertical right-left midline or centerline 5 that establishes or approximately establishes symmetric right and left halves of the motorcycle 2, the first / outer right lighting portion 306R can be disposed further away from the motorcycle right-left centerline 5 than the second / inner right lighting portion 308R; and the first / outer left lighting portion 306L can be disposed further away from the motorcycle right-left center line 5 than the second / inner left lighting portion 308L. In other words, the first / outer right and first / outer left lighting portions 306R,L are disposed on outer sides of their corresponding right and left position lenses 104R,L, toward, near, or generally near right and left outer borders of the vehicle light assembly 100; and the second / inner right and second / inner left lighting portions 308R,L are closer to the motorcycle right-left centerline 5 than the first / outer right and first / outer left lighting portions 306R,L.

As indicated in FIG. 2, and as illustrated in greater detail in FIG. 4, in various embodiments the first / outer and second / inner right side lighting portions 306R, 308R are located on or extend away from different sides (e.g., opposite sides, or right and left sides) of the periphery of the right projector lens 306R. More particularly, a given first / outer lighting portion 306 is located on or extends away from a first / outer side of its corresponding projector lens 104; and a given second / inner lighting portion 308 is located on or extends away from a second / inner side of its corresponding projector lens 104. In the embodiments shown, the first / outer and second / inner right side lighting portions 306R, 308R are respectively located on the right side and the left side of the periphery of the right projector lens 104R, along a common right diagonal line 109R depicted in FIG. 4 which extends right-sidewardly and upwardly above the center point 105R of the right projector lens 104R. In a similar manner, the first / outer and second / inner left side lighting portions 306L, 308L are respectively located on the left side and the right side of the periphery of the left projector lens 104L, along a common left diagonal line 109L that extends left-sidewardly and upwardly above the center point 105L of the left projector lens 104L. Accordingly, such a configuration of right side lighting portions 306R, 308R, left side lighting portions 306L, 308L, and circle portions 310L,R resembles or looks like human face, wherein a pair of projector lenses 104R,L and their surrounding circle portions 310L,R can look like eyes, and lighting portions 306, 308 corresponding to each projector lens 104 can look like eyebrows. As a result, a pedestrian, car driver, or other motorcycle driver can recognize the presence and speed of the motorcycle 2 easily, particularly because such a human face configuration of lighting elements 306R,L, 308R,L, 310R,L can trigger the human brain's intrinsic neural response to facial imagery (i.e., the brain's natural facial feature recognition / decoding abilities). Furthermore, such a configuration of lighting elements 306R,L, 308R,L, 310R,L results in a visually unique additional lighting pattern or design, which conveys a strong visual impression and is highly memorable to an observer.

The first and second right lighting portions 306R, 308R and the first and second left lighting portions 306L, 308L are configured for outputting additional or auxiliary lighting (e.g., position lighting) that can enhance or promote motorcycle visibility without high cost and more parts, as elaborated upon below. In several embodiments, the first and second right lighting portions 306R, 308R as well as the first and second left lighting portions306L, 308L are coupled to or form portions of a single inner lens structure that is configured for engagement (e.g., mating engagement) with position lens holders, as also elaborated upon below.

The vehicle light assembly 100 can additionally include a right winker or blinker bulb 118R and a left winker or blinker bulb 118R, which are configured for intermittently or periodically flashing illumination corresponding to right and left turn signals, respectively. In a number of embodiments, each winker bulb 118 is vertically offset or disposed above the first lighting portion 306, and sidewardly and upwardly from projector lens 104, in each of the right and left sides of the vehicle light assembly 100.

In several embodiments the motorcycle light assembly 100 includes an additional / auxiliary light source 114 (e.g., a position bulb or other light source, such as a set of LEDs) which is located in the vehicle light assembly 100, behind or beneath (i.e., covered by) the top front cover 64. The additional light source 114 can a single light source that is (a) horizontally disposed approximately midway between the right and left projector lenses 104R,L, on the center line 5 of the motorcycle 2; and (b) vertically offset above the corresponding center points 105R.L of the right and left projector lenses 104R,L. In particular, a center point 115 of the additional light source 114 can be disposed on a horizontal auxiliary light source midline 113 which is parallel to and at a predetermined vertical distance above the common horizontal projector lens midline 111. The center point 115 of the additional light source 114 can be positioned relative to the center point 105R,L of each of the right and left projector lenses 104R,L such that a distance between the center point 115 of the additional light source and the center point 105R of the right projector lens 104R is approximately equal to a distance between the center point 115 of the additional light source 114 and the center point 105L of the left projector lens 104L.

The best location of the additional light source 114 is above the projector lens 104 or first lighting portion 306 because light emitted by the additional light source 114 can travel or be delivered to both sides of each projector lens 104, including inner and outer sides of each projector lens 104. Additionally, because of this location of the additional light source, light emitted by the additional light source 114 can project through a lens holder corresponding to each projector lens 104, and such light can be directed to each first / outer lighting portion 308 associated with the projector lenses 104, in a simple or straightforward manner as further detailed below.

As indicated in FIG. 4, the motorcycle light assembly 100 also includes a right high beam reflector 120R and a left high beam reflector 120L, which are configured for reflecting or directing high beam illumination emitted by right and left projector bulbs through the outer lens 102, respectively.

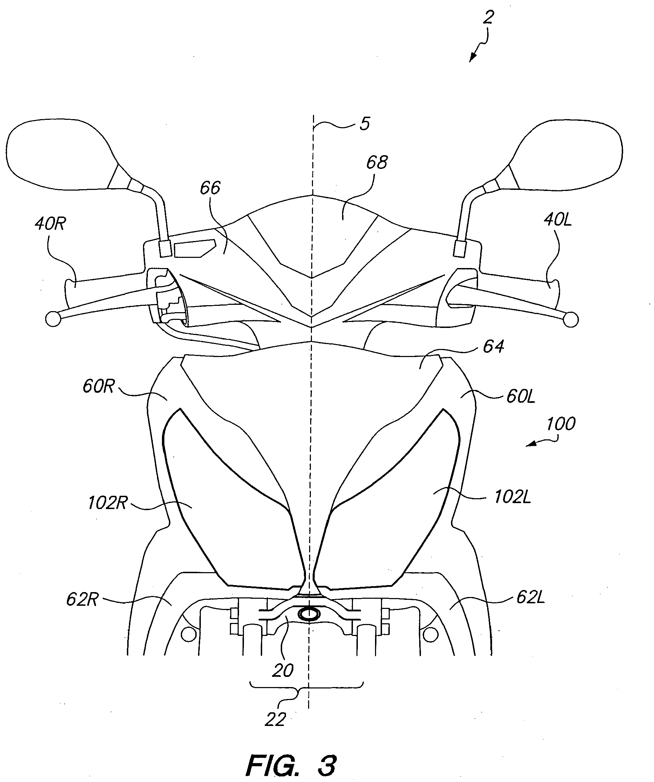

FIG. 3 provides another partial front view of the motorcycle 2 of FIGs. 1 and 2, which indicates in various embodiments that the outer lens portion 102 is configured for fitting over, enclosing, or covering each of (a) the right and left projector lenses 104R,L; (b) the first and second right lighting portions 306R, 308R; (c) the first and second left lighting portions 306L, 308L; and (d) the right and left winker bulbs 118R,L. Thus, in various embodiments, the outer lens portion 102 is an integral or single piece of material. The outer lens 102 can form a front, outermost, or exterior portion of the motorcycle light assembly 100.

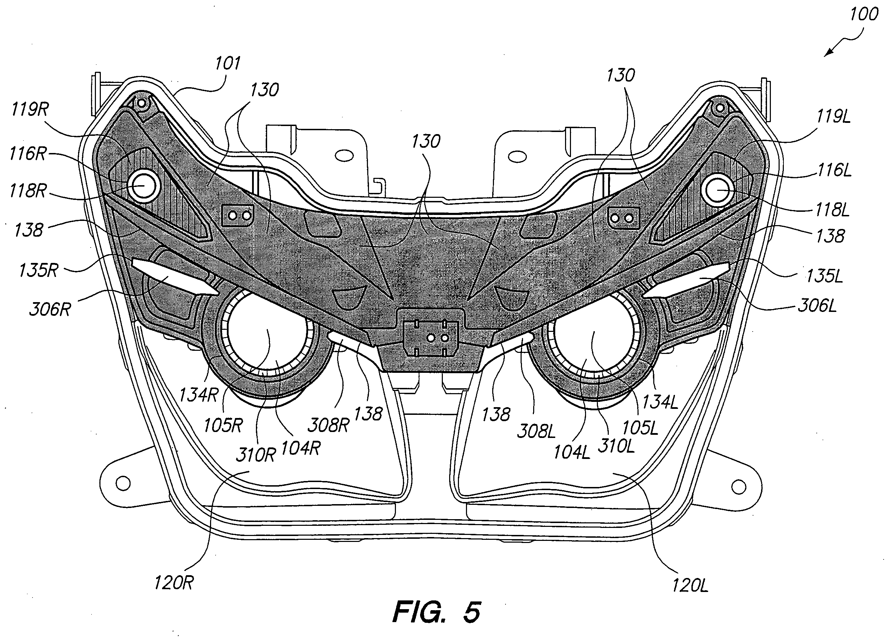

In various embodiments, the motorcycle light assembly 100 includes multiple structural layers that are adjacently disposed, aligned, or assembled relative to one another between a rear or base portion of the motorcycle light assembly 100 and the front, exterior, or outermost portion of the motorcycle light assembly 100. For instance, as further described below with reference to FIGs. 5 - 7, the motorcycle light assembly 100 includes an extension member 130 that is secured (e.g., by screws) with a light-transmitting inner lens 300 to the outer lens 102 from a back to a front direction of motorcycle. The extension member 130 selectively or partially covers particular internal portions of the motorcycle light assembly 100, and has a number of openings configured for alignment or engagement (e.g., mating engagement) with the projector lenses 104R,L and the first / outer right and first / outer left lighting portions 306R,L. Detailed aspects of the motorcycle light assembly 100, including particular layered or adjacently disposed internal structural motorcycle light assembly elements, are elaborated upon hereafter with respect to FIGs. 5 - 13.

FIG. 5 is a first left-right cross-sectional schematic illustration of a motorcycle light assembly 100, which includes an extension member 130, which is not made of light-transmitting material, and which is configured for covering particular inner portions of the vehicle light assembly 100 in accordance with an embodiment of the present disclosure. The surface (e.g., the inner surface) of the extension member 130 can be treated or coated by depositing aluminum thereon. In an embodiment, the extension member 130 is configured for alignment relative to and/or attachment to or engagement (e.g., mating engagement) with (a) the inner lens' right and left circle portions 310R,L; (b) the first / outer and second / inner right and left lighting portions 306R,L; and possibly (c) portions of the housing 101 (e.g., upper portions of the housing 101, or attachment members coupled thereto). The extension member 130 can include right and left projector lens openings or holes 134R,L configured for surrounding or encircling portions of the right and left projector lenses 104R.,L, respectively, such that the right and left projector lenses 104R,L are disposed (e.g., centrally disposed) within the extension member's right and left projector lens openings 134R,L. The extension member 130 can additionally include right and left lighting portion openings 135R,L configured for receiving the first / outer right lighting portion 306R and the first / outer left lighting portion 306L, such that the first / outer right lighting portion 306R and the first / outer left lighting portion 306L can respectively extend or protrude beyond or through the lighting portion openings 135R,L of the extension member 130. The extension member 130 can also have a lower or bottom border 138 below or adjacent to which the second / inner right lighting portion 308R and the second / inner left lighting portion 308L can reside. Accordingly, the inner lens 130 exposes only the lighting portions 306, 308 and the circle portions 310 through the holes and border(s) of the extension member 130. As a result, a characteristic additional lighting profile, outline, or figure provided by the lighting portions 306, 308 and the circle portions 310 can be clearly optically emphasized and visually distinguished, such as a characteristic additional lighting profile representative of or corresponding to an image of a human face.

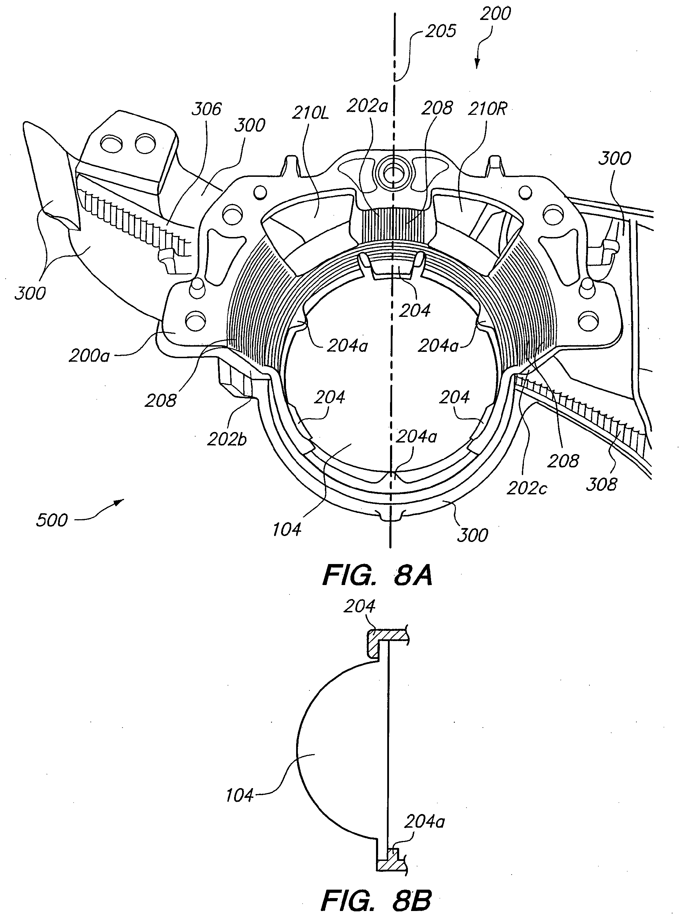

The extension member 130 can also be configured for covering upper portions of the right and left projector lenses 104R,L corresponding to projector lens areas that are of minimal / negligible importance or irrelevant with respect to outputting low beam headlight illumination. In several embodiments as detailed below with reference to FIG. 8, low beam headlight illumination is output primarily or only through lower half portions of the right and left projector lenses 104R,L. The extension member 130 can thus cover or optically block an upper fraction (e.g., approximately an upper half portion) of each of the right and left projector lenses 104R,L without adversely impacting the vehicle light assembly's output of low beam headlight illumination. As indicated in FIG. 5, the lower border 138 of the extension member is angularly disposed or tilted in an upper-sideways direction, and is hung over a portion of each projector lens 10. As a result, a visual image conveyed by the vehicle lighting assembly 100, such as the aforementioned human face image, will provide a virile and strong impression upon a viewer, thereby enhancing the visibility of the motorcycle. The lower border 138 of extension member 130 avoids significantly extending into spatial regions corresponding to the right and left high beam reflectors 120R,L, and therefore the extension member 130 avoids adversely affecting the output of high beam headlight illumination.

In some embodiments, the extension member 130 can support, mate with, or include a right winker bulb hole 116R that surrounds the right winker bulb 118R; and a left winker bulb hole 116L that surrounds the left winker bulb 118L. A right / left winker reflector 119R,L can be formed respectively around the right /left bulb hole 116R,L. The surfaces of the winker reflectors 119 can be treated by depositing aluminum thereon. As indicated in FIG. 5, the extension member 130 is configured to partially cover or optically block illumination output by the additional light source 114. As a result, even a standard light output power additional light source 114 (e.g., a low cost standard light output power position bulb) can be used to provide light to the lighting portions 306, 308 and the circle portions 310 of the inner lens 300 in a manner that results in the output or emission of readily visible or clearly perceivable position lighting.

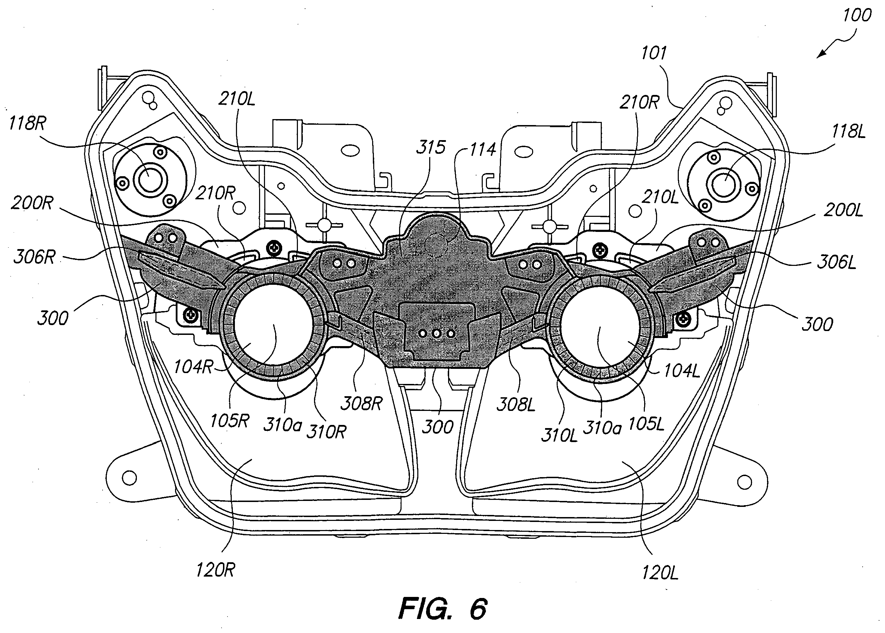

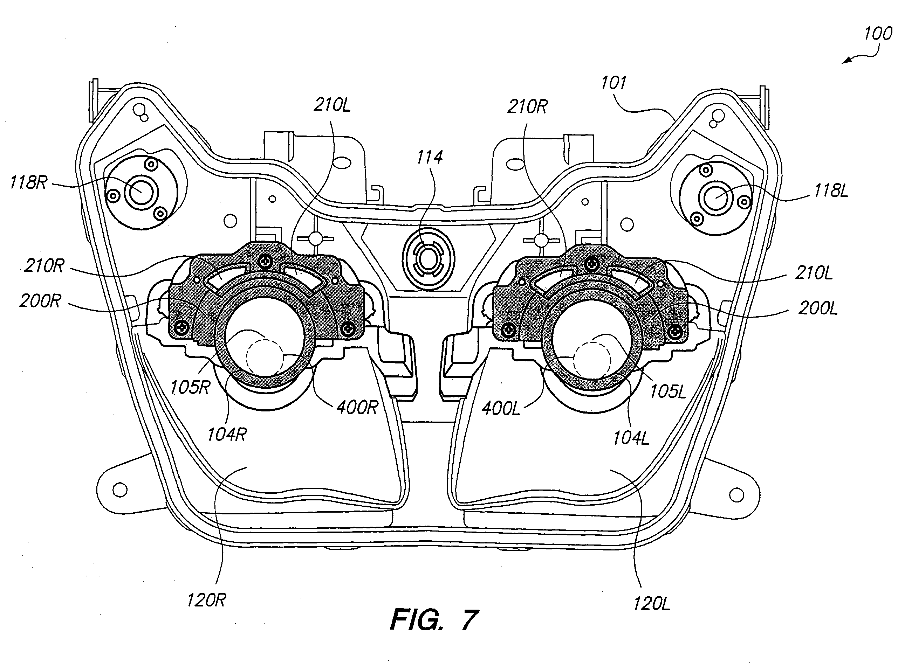

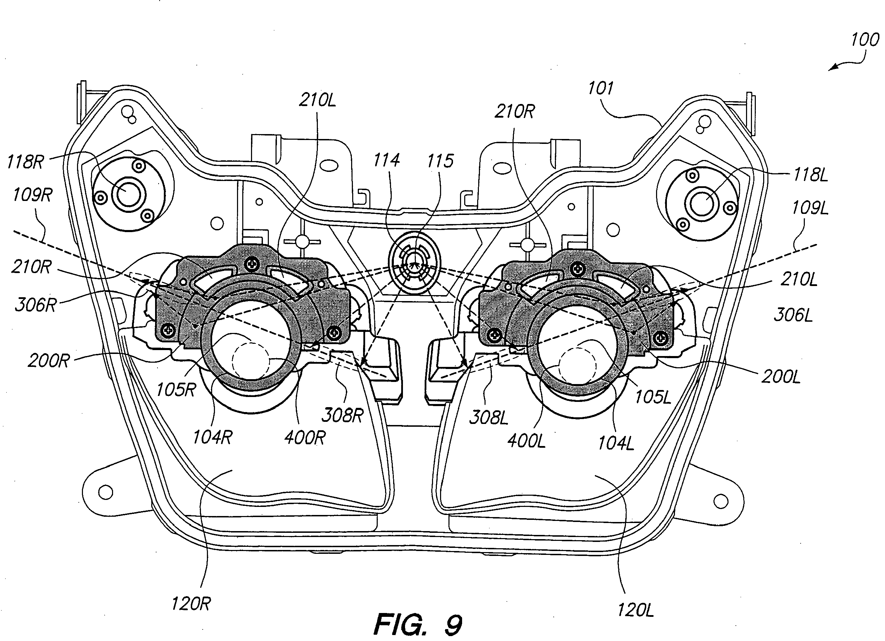

FIG. 6 is a second left-right cross-sectional schematic illustration of a motorcycle light assembly 100 corresponding to FIG. 7 and 9, which includes a light-transmitting inner lens or inner lens member 300 that provides first / outer and second / inner lighting portions 306R,L, 308R,L on different (e.g., right and left) sides of each projector lens 104R,L. The inner lens 300 is made of a light-transmitting material such as a transparent or half-transparent resin or acryl material, and is formed integrally as a single piece of material for providing the first / outer and second / inner right lighting portions 306R, 308R and the first / outer and second / inner left lighting portions 306L, 308L in accordance with an embodiment of the present disclosure. The first and second right and left lighting portions 306R,L, 308R,L can include prism and/or Fresnel lens structures, such as elements having a saw-tooth-shape or serrated profile as shown in FIG. 8A, configured for scattering / dispersing, directing, redirecting, and/or reflecting light incident thereupon in multiple directions, in a manner understood by one of ordinary skill in the relevant art.

The inner lens 300 can be formed, manufactured, or fabricated (e.g., by way of a molding process, such as injection molding) as a single, unitary, or integral piece of material (e.g., a single piece of polymer or plastic material such as polycarbonate), which can have a distinct color (e.g., blue, or another color such as amber) relative to the color of low and high beam illumination (e.g., a white or broad spectrum color), such that position lighting output by the first and second lighting portions 306R,L, 308R,L can be readily distinguished from projector light illumination. Accordingly, the first and second lighting portions 306, 308 can emit blue light, which is readily visually distinguishable from the headlight illumination color. In various embodiments, the right first / outer lighting portion 306R, the left first / outer lighting portion 306L, the right second / inner lighting portion 308R, and the left second / inner lighting portion 308L can scatter / disperse, direct, redirect, or reflect incident light such that light emanating or propagating away from such lighting portions 306R,L, 308R,L includes a vector component parallel or generally parallel to a forward low beam illumination direction or a forward high beam illumination direction, as well as vertically upward and downward vector components. Accordingly, the first / outer and second / inner lighting portions 306, 308 can be seen as position lighting portions clearly and strongly.

In several embodiments, the inner lens 300 includes right and left circle portions or projector lens mating elements 310R,L that can be disposed adjacent to, mounted around, or fit upon or over portions of the right and left projector lens holders 200R,L. The right and left circle portions 310R,L respectively surround or substantially surround the right and left projector lenses 104R,L. That is, the circle portions 310R,L include or form openings in the inner lens member 300 within which the projector lenses 104R,L can be disposed. Furthermore, the circle portions 310R,L can include grooving lines or recesses 310a, which can provide light dispersion means that facilitate or enhance light dispersion, scattering, redirection, or reflection in multiple directions (e.g., forward, as well as vertically upward and downward) away from the circle portions 310L,R toward and through the outer lens 102, into the motorcycle's external environment. Accordingly, around the projector lenses 104R,L (e.g., circularly adjacent to or concentric with the periphery of each projector lens 104), the inner lens 300 can receive light transmitted from the additional light source 114, and emit blue light in a circular distribution around each projector lens 104. Such circularly distributed blue light can emphasize the aforementioned image of human eyes, and can contribute to promoting the visibility of the motorcycle 2. In some embodiments, the inner lens member 300 also includes an upper portion 315 configured for covering the additional light source 114.

In general, the inner lens member 300 can be fabricated to provide first / outer and second / inner lighting portions 306, 308 that are disposed relative to each other (and hence slant relative to projector lenses 104) in accordance with a very wide range of spatial configurations or orientations, dimensions / sizes / spatial extents, and/or relative angular relationships, for instance, based upon particular embodiment details or vehicle light assembly design objectives / constraints.

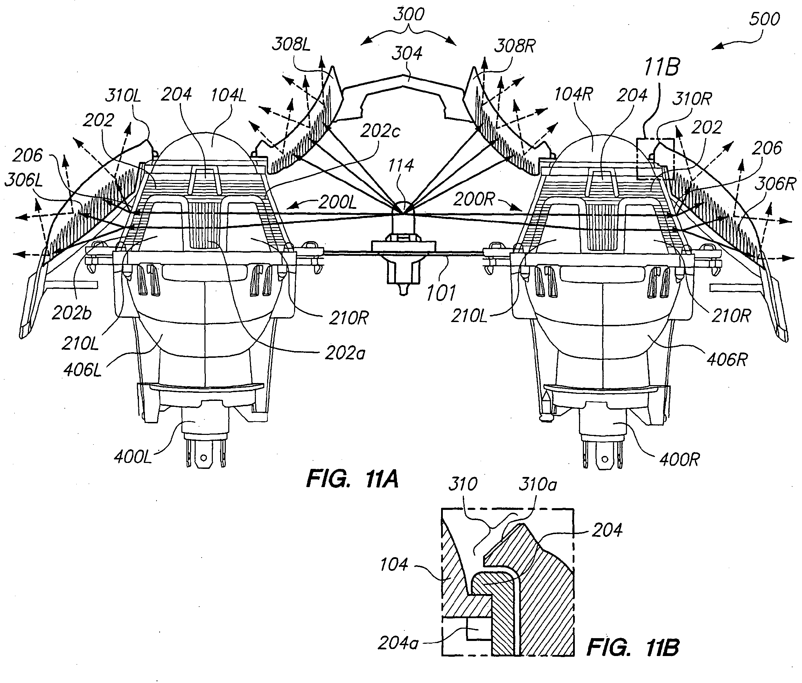

In a number of embodiments, an additional lighting or position lighting subassembly within the vehicle light assembly 100 can be defined to include each projector lens holder 200R,L and the hole means 210 formed therein; each projector lens 104R,L; and particular portions of the inner lens 300, including the lighting portions 306R,L, 308R,L, and the right and left circle portions or mounting segments 310R,L. Detailed aspects of an additional lighting subassembly are described below with reference to FIGs. 8A and 11A.

FIG. 7 is a third left-right cross-sectional schematic illustration of a motorcycle light assembly 100 in accordance with an embodiment of the present disclosure. In various embodiments, the motorcycle light assembly 100 provides a structural support, frame member, or housing 101 that is configured for carrying or supporting motorcycle light assembly elements including the right and left winker bulbs 118R,L; the additional light source 114; the right and left high beam reflectors 120R,L; plus a right and a left light-transmitting projector lens holder 200R,L. The housing 101 can be secured or attached (e.g., removably mounted) to the motorcycle 2 by fasteners such as bolts or screws.

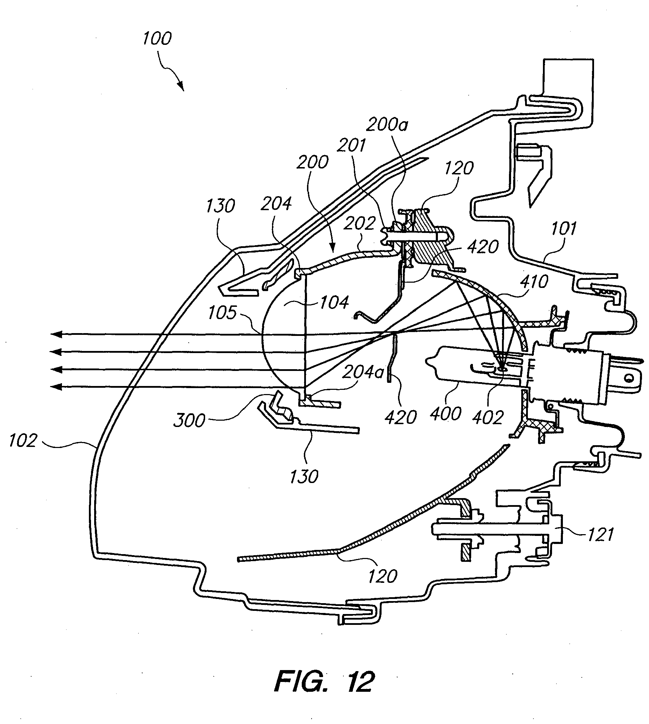

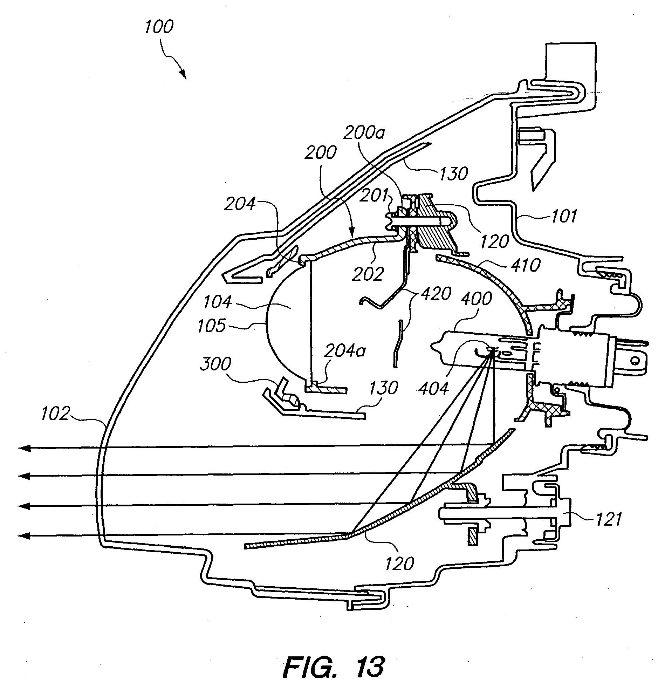

The right and left projector lens holders 200R,L are respectively configured for retaining or maintaining the right and left projector lenses 104R,L in predetermined dispositions relative to right and left projector bulbs 400R,L. As further described below with reference to FIGs. 12 and 13, the right and left projector bulbs 400R,L are disposed behind or rearward of each of the right and left projector lenses 104R,L and right and left projector lens holders 200R, respectively. Such positioning of the right and left projector bulbs 400R,L behind the right and left projector lenses 104R,L is indicated in FIG. 7 by dashed lines within the circumference of the right and left projector lenses 104R,L.

In a number of embodiments, each of the right and left projector bulbs 400R,L is configured for selectively generating or outputting low beam illumination or high beam illumination. As shown in FIG. 12, low beam illumination output by a given projector bulb 400R,L is reflected by low beam reflectors 410 directed in a forward low beam light distribution through particular portions (e.g., lower portions) of a corresponding projector lenses 104, toward and through portions (e.g., central or generally central portions) of the outer lens 102, into the motorcycle's external environment, in the manner shown in FIG. 12. High beam illumination output by the right and left projector bulbs 400R,L is respectively directed to the right and left high beam reflectors 120R,L and reflected thereby in a forward high beam light distribution such that it travels toward and through other portions (e.g., lower portions) of the outer lens 102 into the motorcycle external environment, in the manner shown in FIG. 13.

As indicated in FIG. 7, each projector lens holder 200 includes a hole means 210 such as a set of windows or apertures formed therein. More particularly, the right projector lens holder 200R includes right and left optical windows or apertures 210R,L through which illumination output by the additional light source 114 can travel toward the first / outer lighting portion 306R. Similarly, the left projector lens holder 200R includes right and left apertures or windows 210R,L through which additional light source illumination can travel toward the first / outer left lighting portion 306L.

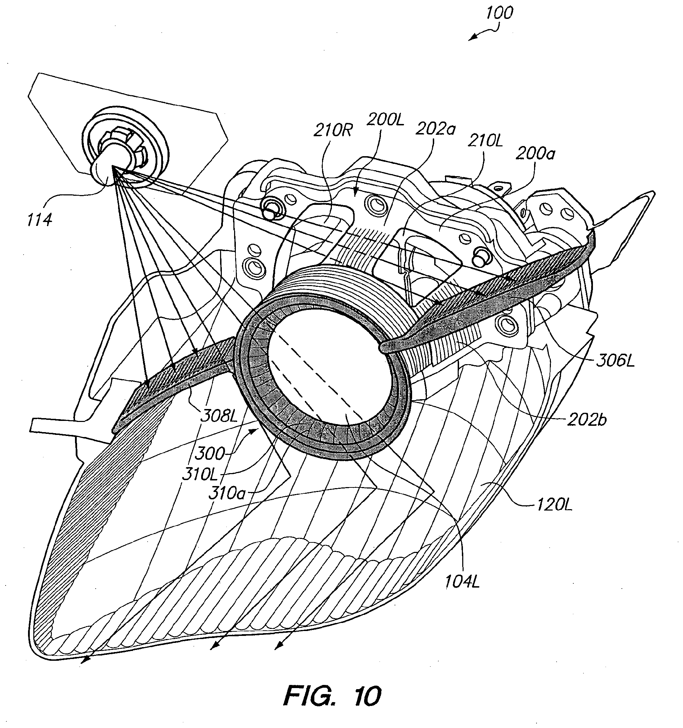

FIG. 9 is the first left-right cross-sectional schematic illustration of the vehicle light assembly 100 of FIG. 7, showing directions or optical paths along which light output by an additional light source 114 can be delivered to and/or distributed across first / outer lighting portions 306R,L and second / inner lighting portions 308R,L around and/or extending away from both right and left projector lenses 104R,L in accordance with an embodiment of the present disclosure. In an embodiment, light emitted by the additional light source 114 can travel directly to each second / inner lighting portion 308R,L extending away from inner sides of the right and left projector lenses 104R,L. Furthermore, as detailed below with further reference to FIGs. 10 and 11A, light emitted by the additional light source 114 can travel through the hole means 210 to light diffusing means formed in or on each projector lens holder 200, and then be scattered toward each first / outer lighting portion 306 such that the first / outer lighting portions 306 can provide or emit additional lighting (e.g., position lighting) in multiple directions through the outer lens 102 into the motorcycle's external environment. The common right / left diagonal lines 109R,L show the alignment of the second / inner lighting portions 308R,L relative to the first / outer lighting portions 306R,L. The lighting portions 306R,L, 308R,L are substantially elongate in shape, and oriented or inclined (e.g., relative to the x-axis) at an angle similar or generally parallel to the orientation or inclination of the bottom lines 138 of the extension member (e.g., relative to the x-axis).

FIG. 10 is a schematic illustration showing internal motorcycle light assembly destinations to which illumination provided by an additional light source 114 such as a position light can travel for enhancing motorcycle visibility or conspicuity in accordance with an embodiment of the present disclosure. Only those portions of the inner lens 300 that provide additional lighting are shown in FIG. 10, for purpose of clarity / simplicity and to aid understanding. While FIG. 10 illustrates left-side portions of the motorcycle light assembly 100, identical, equivalent, or analogous considerations apply to right-side portions of the motorcycle light assembly 100. In an embodiment, additional light source illumination can directly travel to the second / inner left lighting portion 308L. Moreover, some additional light source illumination can travel directly to the first / outer left lighting portion 306L by way of passing through the hole means 210R,L formed in the left projector lens holder 200L. Thus, by way of passing through the hole means 210, some of the light emitted by the additional light source 114 can travel unobstructed or unattenuated through spatial regions between the leg portion 202a, directly to the first / outer left lighting portion 306L. Such directly communicated light can travel a significant distance from the additional light source 114, through the hole means 210, across spatial regions beneath the upper shroud member 202, to the first / outer left lighting portion 306L. However, the light emitted by the additional light source 114 is not attenuated across this significant distance because the hole means 210 and the open structure of the projector lens holder 200 ensure that the projector lens holder 200 does not cause such light to decay. Accordingly, such direct light transmission to the first / outer lighting portion 306L contributes a limited or small amount of light intensity to the light emitted by the first / outer lighting portion 306L.

In several embodiments, additional light source illumination can also directly travel to the left high beam reflector 120L, for instance, because the left projector lens holder 200L omits or excludes structural elements or features (e.g., underside or lower structures such as a lower shroud member) that block or significantly obscure additional light source illumination traveling toward the left high beam reflector 120L. Therefore, additional light source illumination incident upon the left high beam reflector 120L can be reflected or directed in a forward or generally forward direction and output by the outer lens 102. Because the angle(s) at which additional light source illumination is incident upon the left high beam reflector 120L can differ from the angles at which high beam illumination output by the left projector bulb 400L is incident upon the left high beam reflector 120L, the forward direction along which the left high beam reflector 120L reflects or directs additional light source illumination can be different than the forward high beam illumination direction.

FIG. 11A is a top schematic illustration showing portions of an additional lighting subassembly 500 within a motorcycle light assembly 100 in accordance with an embodiment of the present disclosure, where the additional lighting subassembly 500 is configured for providing or outputting position lighting using a single additional light source 114 such as a single position bulb by which illumination can be delivered to multiple lighting portions 306R,L, 308R,L associated with both right and left projector bulbs 400R,L. In an embodiment, the additional lighting subassembly 500 includes a right projector bulb housing 406R within which a right projector bulb 400R can reside; a right projector lens holder 200R configured for holding a right projector lens 104R and coupled to the right projector bulb housing 406R; a left projector bulb housing 406L within which a left projector bulb 400L can reside; and a left projector lens holder 200L configured for holding a left projector lens 104L and coupled to the left projector bulb housing 406L.

The right projector lens 104R extends or projects beyond a front portion, boundary, or edge of the right projector lens holder 200R; and the left projector lens 104L extends or projects beyond a front portion, boundary, of edge of the left projector lens holder 200L. The right projector lens holder 200R includes a shroud member 202 having hole means 210 such as right and left windows 210R,L formed therein. Similarly, the left projector lens holder 200L includes a shroud member 202 having hole means 210 such as right and left windows 210R,L formed therein.

The additional lighting subassembly 500 further includes an inner lens 300 formed as an integral or single piece of light-transmitting material, such as a polymer or plastic material exhibiting a blue and/or other color which is readily distinguishable from white or full / broad spectrum color corresponding to low beam and high beam projector bulb illumination. The inner lens 300 includes a first / outer lighting portion 306R and a second / inner lighting portion 308R that are coupled to a right circle portion or mounting segment 310R, which is attachable to the right projector lens holder 200R by way mating engagement with a portion of the right projector lens holder 200R, such as a projector lens retention portion 204. The inner lens 300 further includes a first / outer left lighting portion 306L and a second / inner left lighting portion 308L that are coupled to a left circle portion or mounting segment 310L, which is attachable to the left projector lens holder 200L by way of mating engagement with a front or exposed portion of the left projector lens holder 200L, such as a projector lens retention portion 204 and a positioning projection portion 204a, as shown in FIG. 11B, which provides details of structural inner lens - lens holder - projector lens relationships of FIG. 11A in a magnified cross-sectional view. The inner lens 300 also includes a bridge segment 304 that couples or joins the second / inner right and left lighting portions 308R,L, and which in certain embodiments facilitates mating of the inner lens 300 with a portion of the extension member 130.

The additional lighting subassembly 100 additionally includes a single additional light source 114 such as one position bulb 114 that is horizontally disposed approximately midway between the right and left projector lens holders 200R,L by way of a portion of the housing 101. The position bulb 115 is additionally vertically disposed relative to the right and left projector lens holders 200R,L such that position bulb illumination can travel through each projector lens holder's hole means 210 en route to the first / outer right and left lighting portions 306R,L.

FIG. 11A further illustrates representative optical paths by which position bulb illumination emitted by the position bulb 115 can arrive at the first / outer right and left lighting portions 306L,R and the second / inner right and left lighting portions 308L,R of the inner lens 300 in accordance with an embodiment of the present disclosure. As indicated in FIG. 11A, position bulb illumination can directly travel from the position bulb 115 to the second / inner right and left lighting portions 308R,L, which can provide or output position lighting by way of prism and/or Fresnel structural features (e.g., elements having a saw-tooth-shaped or serrated cross-section, as depicted in FIG. 8A) formed therein / thereon.

In the embodiment of FIG. 11A, position bulb illumination can additionally travel along optical paths that extend through the right and left windows 210R,L formed in the right and left projector lens holders 200R,L. That is, position bulb illumination traveling toward the right projector lens holder 200R can travel through the left windows 210L formed in the right projector lens holder's shroud member 202; and position bulb illumination traveling toward the left projector lens holder 200L can travel through the right windows 210R formed in the left projector lens holder's shroud member 202.

As described above with reference to FIG. 10, at least some light (e.g., a relatively limited or small amount of light) emitted by an additional light source 114 such as a position bulb can directly travel from the additional light source 114, through the projector lens holder's hole means 210, to the first / outer right and left lighting portions 306R,L, thereby contributing to the emission of position lighting by the first / outer lighting portions 306R,L. Thus, the first / outer right and left lighting portions 306R,L can emit some additional / position lighting as a result of the direct incidence position bulb light thereupon.

However, in accordance with embodiments of the present disclosure, the majority of the additional / position lighting emitted by the first / outer right and left lighting portions 306R,L arises from the scattering of light incident upon each projector lens holder's light diffusion means 208 toward and to the first / outer right and left lighting portions 306R,L. Thus, the scattering of light received from a single additional light source by each projection lens holder's light diffusion means 208 provides the majority or dominant contribution to the overall amount or intensity of additional / position lighting emitted by the first / outer right and left lighting portions 306R,L.

FIG. 8A is a rear schematic illustration showing left side portions of the additional lighting subassembly 500, which depicts spatial relationships between a left side projector lens holder 200L and first / outer and second / inner lighting portions 306R,L of an inner lens 300 in accordance with an embodiment of the present disclosure. While FIG. 8A shows left side portions of the additional lighting subassembly 500, descriptive material below applies analogously or equally to right side portions of the additional lighting subassembly 500. The projector lens holder 200 has a housing portion 200a where the lens holder 200 is mounted to the low beam and high beam reflectors 410,120. The projector lens holder 200 includes three leg portions 202a,b,c that are angularly spaced about 90 degrees apart. A first leg portion 202a has grooves 208 formed in a front-rear direction or longitudinal orientation. Second and third leg portions 202b,c each include grooves 208 formed in a circular direction or circumferential orientation. The grooves 208 in each of the leg portions 202a,b,c provide or form light diffusion, dissemination, or scattering means.

With reference to FIGs. 8A and 11A, in various embodiments, once position bulb illumination has traveled through the projector lens holders' right or left windows 210R,L, the majority of such position bulb illumination arrives at and is incident upon interior and/or exterior surfaces of outer side or outermost portions or surface areas of the leg portions 202a,b,c, which form the right and left projector lens holders' upper shroud members. Such leg portions 202a,b,c include light diffusion, dissemination, or scattering means 208 formed in or on an their interior and/or exterior surfaces, such as prism and/or Fresnel structural features, ridges and/or indentations and/or elements having a saw-tooth-shaped cross-section and/or serrated profile that facilitate enhanced diffusion or scattering / dispersion of light toward the first / outer right and left lighting portions 306R,L. This enhanced diffusion or scattering / dispersion of light toward the first / outer right and left lighting portions 306R,L increases the amount of first / outer right and left lighting portion surface area to which position bulb illumination is delivered (e.g., by increasing or maximizing the angular spread of light that propagates away from the light diffusion means 208 toward the first / outer lighting portions 306), thereby increasing or enhancing the generation or emission of position lighting by the first / outer right and left lighting portions 306R,L.

The light diffusion means 208 provided by embodiments in accordance with the present disclosure therefore achieve a key purpose or advantage of this invention, which is to provide a vehicle light assembly 100 that avoids using a costly additional light source 114 such as a position bulb with increase or high light power output, and which effectively emits additional / position lighting having a readily or highly visible spatial profile and a readily or highly perceivable intensity around two or more projector lenses 104 by way of a single, low cost, standard or moderate output power additional light source 114 (e.g., an ordinary position bulb).

The projector lens holder 200 is made of a light-transmitting material, such as a transparent, substantially transparent, or partially transparent material like a clear resin or acryl material, in which both hole means 210 and light diffusion means 208 can be readily or easily formed (e.g., in association with or during a manufacturing or molding process, such as an injection molding process). The ridges, indentations, and/or serrations of the light diffusion means 208 can correspond to, follow, or form portions of arcs that exhibit or generally exhibit a concentric type of arrangement relative to each other. The light diffusion means 208 angularly (re)direct, disseminate, diffuse, or spread light incident thereupon in multiple directions toward the first / outer lighting portion 306. The first / outer lighting 306 generates or emits position lighting in response to illumination received from the light diffusion means 208 in a manner correlated with or corresponding to the angular spread of illumination provided to the first / outer lighting portion 306 by its associated light diffusion means 208.

In several embodiments, the projector lens holder 200 is a right-left symmetric structure, for instance, relative to a vertical reference or dividing line 205 that delineates or separates the projector lens holder 200 into mirror image right and left halves, where the right window 210R and the left window 210L are horizontally disposed symmetrically relative to or equidistant from the vertical dividing line 205. Furthermore, the hole means 210 formed in each projector lens holder 200 are symmetrically formed relative to the vertical dividing line 205. Thus, the projector lens holder 200 and its hole means 210 exhibit mirror image symmetry about the vertical reference line 205. Moreover, the hole means 210 are symmetrically formed relative to the direction(s) along which light emitted by the additional light source 114 can travel through the projector lens holder 200 by passing through the hole means 210 toward and to the light diffusion means 208. A right projector lens holder 200R and a left projector lens holder 200L can therefore be structurally identical, simplifying a projector lens holder manufacturing process and a headlight assembly construction process. In other words, the same projector lens holder 200 can be used on either the right side or the left side of the additional lighting subassembly 500. This not only reduces parts count, but reduces the cost of producing projector lens holders 200.

As indicated above, in various embodiments the projector lens holder 200 has a circumference defining an opening that surrounds, essentially surrounds, or approximately surrounds / encircles the entire circumference of a projector lens 104 mounted to the projector lens holder 200. The projector lens holder 200 can have three projector lens retention portions 204 and three positioning projections 204a alternately distributed along the circumference of the projector lens holder 200 as shown in FIG. 8A. Along the circumference of the projector lens holder 200, the projector lens retention portions 204 can be formed about 120 degrees apart and the positioning projections 204a can be formed about 120 degrees apart from one another. As illustrated in FIG. 8B, which is a cross-sectional view of FIG. 8A taken along a vertical reference line 205, each of the projector lens retention portions 204 can have a hook-shape configured to antagonistically and/or resiliently cooperate with positioning projections 204a to position or mount / securely retain the projector lens 104. However, the upper shroud member 202 surrounds or encircles significantly less than the entire circumference of the projector lens 104. For instance, as indicated in FIG. 8A, portions of the upper shroud member 202 of each projector lens holder 200 correspond or exhibit an upper half circle shape. This upper half circle shape of the shroud member 202 is also apparent when the shroud member 202 is seen from the front, i.e., observed from a front view or viewed toward the front portion of the motorcycle 2. Thus, each projector lens holder 200 can be formed as an upper half portion of a circle, ellipse, or other geometric shape that includes one or more characterstic arcs or curves, where the geometric profile of this upper half portion can be perceived when viewed toward the front portion of the motorcycle 2. The shroud member 202, and hence the projector lens holder 200 itself, correspondingly excludes or omits a lower half circle portion, structure, or shape. Therefore, the projector lens holder 200 is structurally open below a lower border or boundary of the shroud member 202, such as below the upper half circle shape of the shroud member 202. Consequently, the projector lens holder 200 can be manufactured or fabricated using a reduced amount of material, and the projector lens holder 200 can exhibit reduced cost and weight.

In addition to enabling the passage of light through or across spatial regions internal to or beneath the upper shroud member 202, the hole means 210 in each projector lens holder 200 enables heat to dissipate or escape from the projector bulbs 400 disposed below the projector lens holders 200. That is, the transfer of heat away from the projector bulbs 400, and hence temperature regulation, maintenance, or cooling of the projector bulbs 400, is facilitated by way of heat convection through the hole means 210 formed in the upper shroud members 200. Even though the projector lens holders 200 have a small volumetric profile correlated with or corresponding to a half circle shape, the projector lens holders 200 can endure substantial amounts of heat associated with the generation of light by the projector bulbs 400 due to heat dissipation in an upward direction through the hole means 210.

FIG. 12 is a first front-rear cross-sectional cutaway schematic illustration of portions a motorcycle light assembly 100 in accordance with an embodiment of the present disclosure, showing the generation and output of low beam headlight illumination. In an embodiment, a projector bulb or headlight bulb 400 is inserted into a rear portion of the motorcycle light assembly housing 101. The projector bulb 400 includes a low beam illumination emitter or filament 402, which is blocked on a lower portion for outputting low beam illumination in accordance with a low beam bulb exit direction, such as an upward direction, across a low beam angular exit range. A low beam reflector 410 is configured for receiving low beam illumination output by the projector bulb 400, and directing or reflecting the low beam illumination such that it converges toward a focal point or focal zone along an optical travel path that extends toward the projector lens 104 associated with the projector bulb 400. A set of low beam shade elements 420 disposed forward of the low beam reflector 410 and proximate to the focal zone are configured for limiting or restricting the angular divergence or spread of the low beam illumination as it travels away from the focal zone toward the projector lens 104. The projector lens 104 focuses low beam illumination passing therethrough, such that low beam headlight illumination is output from the projector lens 104 in the forward low beam light distribution. The low beam headlight illumination travels to and through portions of the outer lens 102 (e.g., middle portions of the outer lens 102) along the forward low beam light distribution into the motorcycle external environment.

As indicated in FIG. 12, the low beam reflector 410 and the low beam shade 420 cooperatively ensure that low beam light distribution is output primarily or only through particular portions, such as an approximate lower half, of the projector lens 104. FIG. 12 also indicates that the extension member 130 can cover or obscure upper portions of the projector lens 104 without adversely affecting the output of low beam headlight illumination from the projector lens 104. As illustrated in FIG. 12, the projection lens holder 200 can be coupled, secured, or attached (e.g., removably mounted) to the low beam and/or high beam reflectors 410, 120 by way of one or more fasteners 201 such as screws. In various embodiments, the low beam and high beam reflectors 410, 120 are connected or formed together as an integral structure, and the projection lens holder 200 is coupled to this connected or integral low beam / high beam reflector structure.

FIG. 13 is a second front-rear cross-sectional cutaway schematic illustration of portions of the motorcycle light assembly 100 of FIG. 12, showing the generation and output of high beam headlight illumination. In an embodiment, the projector bulb 400 also includes a high beam illumination emitter or filament 404, which is configured for outputting high beam illumination in accordance with a high beam bulb exit direction, such as a downward direction, across a high beam angular exit range. A high beam reflector 120 is configured for receiving high beam illumination output by the projector bulb 400, and directing or reflecting the high beam illumination such that it propagates away from the high beam reflector 120 in the forward high beam light distribution. This high beam headlight illumination travels to and through portions of the outer lens 102 (e.g., lower portions of the outer lens 102 relative to portions of the outer lens 102 through which the low beam headlight illumination travels) along the forward high beam light distribution, into the motorcycle external environment.

An aiming adjustment mechanism (e.g., a threaded element such as a bolt) 121 can be coupled to the high beam reflector 120 to facilitate adjustment of a light axis corresponding to the forward low and high beam light distribution, in a manner understood by one of ordinary skill in the relevant art because the low beam reflector 410 and the high beam reflector 120 are connected or formed integrally. When the adjustment bolt 121 is adjusted, the high beam and low beam reflectors 120, 410 are moved together with the headlight bulb 400, also moving the projector lens holder 200 and the projector lens 104 relative to the housing 101. Moreover, a single adjustment bolt 121 can be configured to adjust both right and left side motorcycle light assembly elements, such that when the adjustment bolt 121 is turned, both right side and left side reflectors 120, 410 are moved with corresponding right side and left side headlight bulbs 400, also moving a pair of lens holders 200 and a pair of projector lens 104 relative to the housing 101. During aiming of the light axis, positionally fixed portions of the motorcycle light assembly 100 include the outer lens 102, the extension member 130, and the inner lens 300, which is fixed by a set of screws from behind the inner lens member.

As indicated in FIGs. 12 and 13, the projector lens holder 200 can include a body portion such as an upper shroud member 202 that is secured or securable to a portion the low beam and high beam reflector 410, 120 by a fastener such as a bolt 201. A projector lens retention portion 204 disposed or formed at a forward portion, section, or end of the upper shroud member 202 is configured for enabling resilient and/or elastic mounting of the projector lens 104 to the projector lens holder 200. The projector lens retention portion 204 can surround or encircle the entire or substantially the entire projector lens circumference; however, in several embodiments the shroud member 202 surrounds or encircles significantly less than the entire circumference of the projector lens 104. For instance, the shroud member 202 can surround or encircle an upper half or approximate upper half of the projector lens 104. Hence, the projector lens holder 200 is structurally open or empty beneath the shroud member 202, and therefore the projector lens holder 200 omits or excludes lower portions that block or obscure illumination traveling toward the high beam reflector 120. Stated in another manner, the projector lens holder 200 can omit or exclude a lower shroud member having a circumferential dimension or length commensurate with that of the upper shroud member 202.

Aspects of particular embodiments of the present disclosure address at least one aspect, problem, limitation, and/or disadvantage associated with the provision of additional / position lighting in exiting vehicle light assemblies. While features, aspects, and/or advantages associated with certain embodiments have been described in the disclosure, other embodiments may also exhibit such features, aspects, and/or advantages, and not all embodiments need necessarily exhibit such features, aspects, and/or advantages to fall within the scope of the disclosure. For instance, while particular representative embodiments described herein correspond to dual headlights that are horizontally disposed relative to each other, other embodiments can additionally or alternatively correspond to multiple headlights that are vertically disposed relative to each other. It will be appreciated by a person of ordinary skill in the art that several of the above-disclosed systems, components, processes, or alternatives thereof, may be desirably combined into other different systems, components, processes, and/or applications. In addition, various modifications, alterations, and/or improvements may be made to various embodiments that are disclosed by a person of ordinary skill in the art within the scope of the present disclosure, which is limited only by the following claims.

## Claims

1. A vehicle light assembly (100) mountable in a motorcycle comprising:
projector illumination units, each having a projector lens (104L, 104R) projecting a light from a light source and a light-transmitting lens holder (200L, 200R) to which said projector lens (104L, 104R) is mounted,
and
an additional light source (114) lighting providing lighting beyond or around a periphery of said projector lens (104L, 104R) by way of light that travels through said light-transmitting lens holder (200L, 200R), wherein,
said projector illumination units are mountable in the motorcycle such that at least two projector illumination units are mounted near each other and said additional light source (114) is mounted between said projector illumination units,
said light-transmitting lens holders (200L, 200R) have formed therein or thereon a light diffusion means (208) for scattering the light from said additional light source
**characterized in that**
a light-transmitting inner lens (300) is configured to emit light by receiving the light from said light diffusion means (208),
the light-transmitting inner lens (300) is mounted around said projector lens (104L, 104R),
said light-transmitting inner lens (300) is formed as an integral structure that extends away from different side portions of each of said projector illumination units, and
said light-transmitting inner lens (300) comprises a first lighting portion (306L, 306R) corresponding to an outer side of each of said projector lenses (104L, 104R), and a second lighting portion (308L, 308R) between said projector illumination units and said additional light source (114), the second lighting portion (308L, 308R) for providing additional lighting by receiving light directly from said additional light source (114).

2. The light assembly (100) of claim 1, wherein, said projector lens (104L, 104R) is resiliently or elastically mounted to said light-transmitting lens holder (200L, 200R).

3. The light assembly (100) of claim 1, wherein,
at least two projector light illumination units are headlight mountable on a front portion of
said motorcycle and said projector lens (104L, 104R) projects a low beam illumination, and the light assembly further comprises:
low beam reflectors (410); and
high beam reflectors (120L, 120R) integrally formed under said low beam reflectors (410), and said light-transmitting lens holders (200L, 200R) exhibit an upper half circle shape as viewed from a front view toward the front portion of said motorcycle, when the light assembly (100) is mounted on said motorcycle.

4. The light assembly (100) of claim 3, wherein,
a hole means (210) is formed in said upper half circle shape of each of said light-transmitting lens holders (200L, 200R), in particular symmetrically relative to the front view of the motorcycle and the position of the light passing from said additional light source (114) to said light diffusion means (208).

5. The light assembly (100) of claim 3, wherein,
said additional light source (114) is centrally mounted between both of said projector illumination units and on an upper side of each of said light-transmitting lens holders (200L, 200R).

6. The light assembly (100) of claim 5, wherein said additional light source (114) is a single position bulb of the motorcycle.

7. The light assembly (100) of claim 6, wherein, each of said projector lenses (104L, 104R) includes a center point (105L, 105R), and said position bulb is vertically offset relative to each projector lens center point (105L, 105R) in a direction toward a hole means (210) formed in an upper half circle portion of each of said light-transmitting lens holders (200L, 200R).

8. The light headlight assembly (100) of claim 7, wherein,
said hole means (210) comprises a set of optical windows (210L, 210R) configured for enabling the passage of position bulb illumination therethrough and convective transfer of projector bulb heat therethrough.

9. The light assembly (100) of claim 1, wherein,
a projector bulb illumination exhibits a first color, and wherein said light-transmitting inner lens (300) exhibits a second color that is readily visually distinguishable from the first color.

10. The light assembly (100) of claim 1, further comprising an extension member (130) configured for selectively covering portions of said light-transmitting inner lens, the extension member (130) including a set of openings (134L, 134R), each opening (134L, 134R) within the set of openings (134L, 134R) configured for receiving said first lighting portion (306L, 306R) corresponding to the outer side of each projector lens (104L, 104R).

11. The light assembly (100) of claim 9 wherein,
said light-transmitting inner lens (300) comprises at least two circle portions (310L, 310R) integrally formed therein, each said circle portion (310L, 310R) surrounding a corresponding projector lens (104L, 104R).

12. The light assembly (100) of claim 2, wherein,
a projector lens retention portion (204) of each light-transmitting lens holder (200L, 200R) has a circumference that surrounds or approximately surrounds the entire circumference of the projector lens (104L, 104R) corresponding to the light-transmitting lens holder (200L, 200R), and wherein a body portion of each light-transmitting lens holder (200L, 200R) surrounds significantly less than the entire circumference of the projector lens (104L, 104R) corresponding to the light-transmitting lens holder (200L, 200R).

13. The light assembly (100) of claim 3, wherein, said high beam reflectors are configured for directly receiving both high beam illumination emitted by projector bulbs (400L, 400R) and an additional light emitted by said additional light source (114).

## Patentansprüche

1. Fahrzeugleuchtenanordnung (100, die an einem Motorrad montierbar ist, die aufweist:
Projektorbeleuchtungseinheiten, die jeweils eine Projektorlinse (104L, 104R), die ein Licht von einer Lichtquelle projiziert, und eine lichttransmittierende Linsenhalterung (200L, 200R) haben, an welcher die Projektorlinse (104L, 104R) montiert ist, und
eine zusätzliche Lichtquelle (114), die mittels Licht, das sich durch die lichttransmittierende Linsenhalterung (200L, 200R) fortpflanzt, eine Ausleuchtung um einen Umfang der Projektorlinse (104L, 104R) oder darüber hinaus bereitstellt, wobei
die Projektorbeleuchtungseinheiten an dem Motorrad derart montierbar sind, dass wenigstens zwei Projektorbeleuchtungseinheiten nahe beieinander montiert werden und dass die zusätzliche Lichtquelle (114) zwischen den Projektorbeleuchtungseinheiten montiert wird,
die lichttransmittierenden Linsenhalterungen (200L, 200R) darin oder darauf eine Lichtstreueinrichtung (208) ausgebildet haben, um das Licht von der zusätzlichen Lichtquelle zu streuen,
**dadurch gekennzeichnet, dass**
eine lichttransmittierende innere Linse (300) konfiguriert ist, um Licht zu emittieren, indem das Licht von der Lichtstreueinrichtung (208) empfangen wird,
die lichttransmittierende innere Linse (300) um die Projektorlinse (104L, 104R) herum montiert ist,
die lichttransmittierende innere Linse (300) als eine integrale Struktur ausgebildet ist, die sich von verschiedenen Seitenabschnitten jeder der Projektorbeleuchtungseinheiten erstreckt, und
die lichttransmittierende innere Linse (300) einen ersten Ausleuchtungsabschnitt (306L, 306R), der einer Außenseite jeder der Projektorlinsen (104L, 104R) entspricht, und einen zweiten Ausleuchtungsabschnitt (308L, 308R) zwischen den Projektorbeleuchtungseinheiten und der zusätzlichen Lichtquelle (114) aufweist,
wobei der zweite Ausleuchtungsabschnitt (308L, 308R) zur Bereitstellung einer zusätzlichen Ausleuchtung dient, indem Licht direkt von der zusätzlichen Lichtquelle (114) empfangen wird.

2. Leuchtenanordnung (100) nach Anspruch 1, wobei
die Projektorlinse (104L, 104R) federnd oder elastisch an der lichttransmittierenden Linsenhalterung (200L, 200R) montiert ist.

3. Leuchtenanordnung (100) nach Anspruch 1, wobei
wenigstens zwei Projektorbeleuchtungseinheiten auf einem vorderen Abschnitt des Motorrads am Scheinwerfer montierbar sind und die Projektorlinse (104L, 104R) eine Abblendlichtbeleuchtung projiziert, und die Leuchtenanordnung ferner aufweist:
Abblendlichtreflektoren (410); und
Fernlichtreflektoren (120L, 120R), die integral unter den Abblendlichtreflektoren (410) ausgebildet sind, und wobei die lichttransmittierenden Linsenhalterungen (200L, 200R) von einer Vorderansicht in Richtung des vorderen Abschnitts des Motorrads gesehen eine obere Halbkreisform zeigen, wenn die Leuchtenanordnung (100) auf dem Motorrad montiert ist.

4. Leuchtenanordnung (100) nach Anspruch 3, wobei
eine Locheinrichtung (210) in der oberen Halbkreisform jeder der lichttransmittierenden Linsenhalterungen (210) insbesondere relativ zu der Vorderansicht des Motorrads und der Position des Lichts, das von der zusätzlichen Lichtquelle (114) zu der Lichtstreueinrichtung (208) geht, symmetrisch ausgebildet ist.

5. Leuchtenanordnung (100) nach Anspruch 3, wobei
die zusätzliche Lichtquelle (114) mittig zwischen den beiden Projektorbeleuchtungseinheiten und einer Oberseite jeder der lichttransmittierenden Linsenhalterungen (200L, 200R) montiert ist.

6. Leuchtenanordnung (100) nach Anspruch 5, wobei die zusätzliche Lichtquelle (114) eine einzige Positionsbirne des Motorrads ist.

7. Leuchtenanordnung (100) nach Anspruch 6, wobei jede der Projektorlinsen (104L, 104R) einen Mittelpunkt (105L, 105R) aufweist, und wobei die Positionsbirne relativ zu jedem Projektorlinsenmittelpunkt (105L, 105R) in eine Richtung auf eine Locheinrichtung (210) zu, die in einem oberen Halbkreisabschnitt jeder der lichttransmittierenden Linsenhalterungen (200L, 200R) ausgebildet ist, vertikal versetzt ist.

8. Leuchtenanordnung (100) nach Anspruch 7, wobei
die Locheinrichtung (210) einen Satz von Lichtfenstern (210L, 210R) aufweist, die konfiguriert sind, um den Durchgang von Positionsbirnenbeleuchtung durch sie hindurch und Konvektionsübertragung der Projektorbirnenwärme durch sie hindurch zu ermöglichen.

9. Leuchtenanordnung (100) nach Anspruch 1, wobei
eine Projektorbirnenbeleuchtung eine erste Farbe zeigt, und wobei die lichttransmittierende innere Linse (300) eine zweite Farbe zeigt, die ohne Weiteres von der ersten Farbe unterscheidbar ist.

10. Leuchtenanordnung (100) nach Anspruch 1, die ferner ein Erweiterungselement (130) aufweist, das konfiguriert ist, um Abschnitte der lichttransmittierenden Linse selektiv abzudecken, wobei das Erweiterungselement (130) einen Satz von Öffnungen (134L, 134R) umfasst, wobei jede Öffnung (134L, 134R) innerhalb des Satzes von Öffnungen (134L, 134R) konfiguriert ist, um den ersten Ausleuchtungsabschnitt (306L, 306R), welcher der Außenseite jeder Projektorlinse (104L, 104R) entspricht, aufzunehmen.

11. Leuchtenanordnung (100) nach Anspruch 9, wobei
die lichttransmittierende innere Linse (300) wenigstens zwei integral damit ausgebildete Kreisabschnitte (310L, 310R) aufweist, wobei jeder Kreisabschnitt (310L, 310R) eine entsprechende Projektorlinse (104L, 104R) umgibt.

12. Leuchtenanordnung (100) nach Anspruch 2, wobei
ein Projektorlinsen-Halteabschnitt (204) jeder lichttransmittierenden Linsenhalterung (200L, 200R) einen Umfang hat, der den gesamten Umfang der Projektorlinse (104L, 104R), welcher der lichttransmittierenden Linsenhalterung (200L, 200R) entspricht, umgibt oder ungefähr umgibt, und wobei ein Körperabschnitt jeder lichttransmittierenden Linsenhalterung (200L, 200R) erheblich weniger als den gesamten Umfang der Projektorlinse (104L, 104R), welche der lichttransmittierenden Linsenhalterung (200L, 200R) entspricht, umgibt.

13. Leuchtenanordnung (100) nach Anspruch 3, wobei die Fernlichtreflektoren konfiguriert sind, um sowohl Fernlichtbeleuchtung, die von Projektorbirnen (400L, 400R) emittiert wird, als auch zusätzliches Licht, das von der zusätzlichen Lichtquelle (114) emittiert wird, direkt zu empfangen.

## Revendications

1. Ensemble de feux pour véhicule (100) installable sur une motocyclette, comprenant :
des dispositifs d'illumination par projecteur, chacun ayant une lentille de projecteur (104L, 104R) projetant une lumière depuis une source lumineuse et un support de lentille phototransmettrice (200L, 200R) sur lequel ladite lentille de projecteur (104L, 104R) est installée,
et
une source lumineuse supplémentaire (114) envoyant de la lumière au-delà ou autour d'une périphérie de ladite lentille de projecteur (104L, 104R) au moyen d'une lumière qui passe à travers ledit support de lentille phototransmettrice (200L, 200R),
dans lequel
lesdits dispositifs d'illumination par projecteur sont installables sur la motocyclette de sorte qu'au moins deux dispositifs d'illumination par projecteur sont installés l'un près de l'autre et ladite source lumineuse supplémentaire (114) est installée entre lesdits dispositifs d'illumination par projecteur,
lesdits supports de lentilles phototransmettrices (200L, 200R) présentent, formé dans ceux-ci ou sur ceux-ci, un moyen de diffusion de lumière (208) pour disperser la lumière depuis ladite source lumineuse supplémentaire
**caractérisé en ce que**
une lentille interne phototransmettrice (300) est configurée pour émettre de la lumière en recevant la lumière depuis ledit moyen de diffusion de lumière (208),
la lentille interne phototransmettrice (300) est installée autour de ladite lentille de projecteur (104L, 104R),
ladite lentille interne phototransmettrice (300) est formée sous la forme d'une structure formant un tout unitaire qui s'étend à partir de différentes parties latérales de chacun desdits dispositifs d'illumination par projecteur, et
ladite lentille interne phototransmettrice (300) comprend une première partie d'éclairage (306L, 306R) correspondant à un côté externe de chacune desdites lentilles de projecteur (104L, 104R), et une seconde partie d'éclairage (308L, 308R) entre lesdits dispositifs d'illumination par projecteur et ladite source lumineuse supplémentaire (114), la seconde partie d'éclairage (308L, 308R) fournissant un éclairage supplémentaire en recevant de la lumière directement à partir de ladite source lumineuse supplémentaire (114).

2. Ensemble de feux (100) selon la revendication 1, dans lequel
ladite lentille de projecteur (104L, 104R) est installée de façon résiliente ou élastique sur ledit support de lentille phototransmettrice (200L, 200R).

3. Ensemble de feux (100) selon la revendication 1, dans lequel
au moins deux dispositifs d'illumination de lumière par projecteur sont installables sur un phare sur une partie frontale de ladite motocyclette et ladite lentille de projecteur (104L, 104R) projette une illumination de feux de croisement, et l'ensemble de feux comprend en outre :
des réflecteurs de feux de croisement (410); et
des réflecteurs de feux de route (120L, 120R) formant un tout unitaire sous lesdits réflecteurs de feux de croisement (410), et lesdits supports de lentilles phototransmettrices (200L, 200R) présentent la forme de la moitié supérieure d'un cercle en regardant de l'avant en direction de la partie frontale de ladite motocyclette, lorsque l'ensemble de feux (100) est installé sur ladite motocyclette.

4. Ensemble de feux (100) selon la revendication 3, dans lequel
un moyen présentant un trou (210) est formé dans ladite forme de moitié supérieure d'un cercle de chacun desdits supports de lentilles phototransmettrices (200L, 200R), en particulier symétriquement par rapport à la vue frontale de la motocyclette et à la position de la lumière passant depuis ladite source lumineuse supplémentaire (114) audit moyen de diffusion de lumière (208).

5. Ensemble de feux (100) selon la revendication 3, dans lequel
ladite source lumineuse supplémentaire (114) est installée centralement entre les deux desdits dispositifs d'illumination par projecteur et sur un côté supérieur de chacun desdits supports de lentilles phototransmettrices (200L, 200R).

6. Ensemble de feux (100) selon la revendication 5, dans lequel ladite source lumineuse supplémentaire (114) est une ampoule de position unique de la motocyclette.

7. Ensemble de feux (100) selon la revendication 6, dans lequel chacune desdites lentilles de projecteur (104L, 104R) inclut un point central (105L, 105R), et ladite ampoule de position est décalée verticalement par rapport au point central de chaque lentille de projecteur (105L, 105R) dans une direction vers un moyen présentant un trou (210) formé dans la partie de moitié supérieure d'un cercle de chacun desdits supports de lentilles phototransmettrices (200L, 200R).

8. Ensemble de feux (100) selon la revendication 7, dans lequel ledit moyen présentant un trou (210) comprend un jeu de fenêtres optiques (210L, 210R) configurées pour permettre le passage de l'illumination des ampoules de position à travers celles-ci et le transfert convectif de la chaleur des ampoules de position à travers celles-ci.

9. Ensemble de feux (100) selon la revendication 1, dans lequel
une illumination d'ampoule de projecteur présente une première couleur, et dans lequel ladite lentille interne phototransmettrice (300) présente une seconde couleur qui est aisée à distinguer visuellement de la première couleur.

10. Ensemble de feux (100) selon la revendication 1, comprenant en outre un élément d'extension (130) configuré pour recouvrir sélectivement des parties de ladite lentille interne phototransmettrice, l'élément d'extension (130) incluant un jeu d'ouvertures (134L, 134R), chaque ouverture (134L, 134R) à l'intérieur de l'ensemble d'ouvertures (134L, 134R) étant configurée pour recevoir ladite première partie d'éclairage (306L, 306R) correspondant au côté externe de chaque lentille de projecteur (104L, 104R).

11. Ensemble de feux (100) selon la revendication 9, dans lequel
ladite lentille interne phototransmettrice (300) comprend au moins deux parties circulaires (310L, 310R) formant un tout unitaire dans celle-ci, chacune desdites parties circulaires (310L, 310R) entourant une lentille de projecteur (104L, 104R) correspondante.

12. Ensemble de feux (100) selon la revendication 2, dans lequel
une partie de rétention de lentille de projecteur (204) de chaque support de lentille phototransmettrice (200L, 200R) a une circonférence qui entoure ou entoure approximativement la circonférence entière de la lentille de projecteur (104L, 104R) correspondant au support de lentille phototransmettrice (200L, 200R), et dans lequel une partie de corps de chaque support de lentille phototransmettrice (200L, 200R) entoure significativement moins que la circonférence entière de la lentille de projecteur (104L, 104R) correspondant au support de lentille phototransmettrice (200L, 200R).

13. Ensemble de feux (100) selon la revendication 3, dans lequel lesdits réflecteurs de feux de route sont configurés pour recevoir directement les deux illuminations de feux de route émises par les ampoules de projecteur (400L, 400R) et une lumière supplémentaire émise par ladite source lumineuse supplémentaire (114).
